# EUROPEAN PATENT APPLICATION

(11) **EP 1 637 335 A1**
(43) Date of publication of application: **22.03.2006**
(21) Application number: 04735660.5
(22) Date of filing: 01.06.2004
(51) Int. Cl.: B41J 21/00

(54) **BOOKLET CREATION SYSTEM, BOOKLET CREATION METHOD, BOOKLET CREATION BOARD, BOOKLET, PRINTING PAPER, COVER SHEET, BOOKLET CREATION COVER SHEET, BOOKLET COVER SHEET, MUSIC-EQUIPPED IMAGE RECORDING MEDIUM CREATION SYSTEM, AND MUSIC-EQUIPPED IMAGE RECORDING MEDIUM**

(30) Priority: 04.06.2003 JP 2003159916; 04.06.2003 JP 2003159915; 31.10.2003 JP 2003371970; 26.01.2004 JP 2004017062; 27.04.2004 JP 2004131278
(71) Applicant: Lab. At-Site, Ltd., Nagoya-shi, Aichi 4520831 (JP)
(72) Inventor: YAMAMOTO, Takemi c/o Lab. at-site, Ltd., Nagoya-shi, Aichi 4520831 (JP)
(74) Representative: Brax, Matti Juhani
(86) International application number: PCT/JP2004/007892
(87) International publication number: WO 2004/108422

(57) **Abstract**

Printing data created by printing data creation means is printed by printing means in such a manner that the print position, size, direction, and order of the printing data will create a booklet. The printing paper has a cut line and a folding line and after the image is printed, the paper is folded and added by a cover. Moreover, JPEG still image data is read in and a moving picture is created from the JPEG still image data. The moving picture data created is combined with music data and the combination is recorded into a compact disc (CD) as an image recording medium. Thus, it is possible to provide a system for an expert or a individual user to acquire an electronic image, edit the image, and easily and rapidly print it directly onto a printing paper, thereby preparing a booklet. Printing paper and covers for creating the booklet are also provided. Moreover, there is provided an image recording medium creation system for reproducing still image data in a moving picture style, creating an optimal music composition for the image, and storing them.

## Description

### [Field of the Invention]

This invention relates to the booklet creation system which output to the electronic image data used as a booklet, the booklet creation approach, the pasteboard for booklet creation, the booklet, the printing paper, and the cover, after reading from a record medium and editing the image data. This invention relates to the image recording medium creation system with music and the image recording medium with music created by this system which read image data and create an electronic album and record image data on a record medium as an electronic album.

### Background of Technology

### [#1 & #4 invention]

Enjoying the electronic image photographed by the spread of digital cameras etc. is also spread, and appreciating image data on the monitor of a personal computer, or editing this image data is performed. And the data is saved at archival medium, such as a hard disk and a compact disk, or is printing with the printer. Moreover, such image data is printed in pasteboard or printing paper, and a book is bound as an album made of paper, and it can leave commemoration and it can be enjoyed, or it can carry out. Compared with the album which stuck the photograph, it is the sensation of an original copy book which printed directly in such pasteboard or printing paper, and bound a book in them, and it can enjoy an image. And in order to create such an album wherein electronic image data is saved at an archival medium, it carries into a specific contractor or bookbinding is requested for data as delivery and an individual album through the Internet.

### [#5 Invention]

The digital image photographed with the digital camera etc. is read into a computer from a record medium, and the album software managed as an electronic album is developed. If such software is used, the electronic image data photographed, for example with the digital camera can be incorporated, it can file as an electronic album and a header can also be attached to each image.

Generally recording electronic image data on CD (a compact disk) as image data and saving it on CD is also performed. Since the image data for 100 divisors can record on CD of one sheet if it is made a photograph while being able to save for a long period of time according to this, without lowering the quality of images, such as a photograph, it becomes possible to keep many images in a compact more. The said-mentioned image data is saved in the condition of once having been compressed into the memory card for digital cameras, and is usually memorized by CD with this condition of having been compressed. As this compression method, it is JPEG (Joint Photographic Experts), for example.

Moreover, it not only saves a static image as mentioned above, but it can save a dynamic image on CD. For example, VCD (Video CD) is one of things for reproducing an animation with CD. Preservation of the dynamic-image data to VCD can be performed by compressing dynamic-image data by the MPEG (Moving Photographic Experts Group) method, especially the method based on the method of MPEG-1. In addition, the image which stands it still like images, such as a thing as which the same frame is continuously displayed for a period and appears dynamic-image data is also reproducible like photograph. Thereby, two or more static images (for example, compressed by the JPEG method) photographed with the digital camera etc. can also record as the dynamic-image data of a slide type which is displayed sequentially, respectively on VCD.

But, there are problems and subjects which explain below.

### [#1 & #4 invention]

However, in this way, in order to print and bookbinding a image directly in pasteboard or printing paper, a vendor must be requested, the approach of an order is troublesome, or remarkable days are taken to be in the condition that a book was bound, and it is hard to say that an electronic image can be easily bookbinding in the state of the album made of paper. If it is the approach of printing only an image and on the other hand sticking the printed image on a ready-made album, an individual can also carry out easily, but a cheap impression cannot be denied if compared with what was bookbinding. Photography becomes possible by the spread of digital cameras, and the approach of bookbinding those images easily is desired.

### #1 Invention

For an expert or an individual user, it is the subject to offer the system which can create the booklet from the electronic image in the condition of having printed the direct image in pasteboard or in printing paper, and to offer the print paper for the system.

### #2 Invention

For an expert or an individual user, it is the subject to offer the system which can create the booklet from the electronic reading and editing image from medium in the condition of having printed the direct image in pasteboard or in printing paper, and to offer the printing paper for the system.

### #3 Invention

For an expert or an individual user, it is the subject to offer the printing paper which can create the booklet from the electronic reading and editing image from medium in the condition of having printed the direct image in pasteboard or in printing paper.

### #4 Invention

For an expert or an individual user, it is the subject to offer the printing paper which can create the booklet in the condition of having printed the direct image in pasteboard or in printing paper, and to offer the book cover to make booklet easily and promptly.

### [#5 Invention]

The image recording medium creation system which read the static images created from the digital camera, etc and which output as an electronic album format at a personal computer monitor, and save as an album of a static image at an output, CD, etc. is known widely. Moreover, saving at VCD dynamic-image data (at slide type) with which said static image is continuously displayed by CD is also performed. However, compared with DVD etc., resolution is far inferior in this VCD, and, generally it remains in displaying the static image of the comparatively low resolution of 240x352 dots.

For this invention it is the subject to offer the image recording medium creation system which can reproduce in animation the static-image data created with the digital camera etc., and can perform the optimal music for an image, can save high-definition dynamic-image data with CD cheaper than a DVD disk etc., and saves music at coincidence, and to offer the image recording medium created by this.

### Summary of the invention

### [#1 Invention]

In order to solve the above mentioned technical problem the booklet creation system of this invention, an electronic image data reading means and an editing means to edit the read electronic image data, it has a print-data creation means to generate print data in the format which uses this electronic image data as a booklet, and a printing means to print these print data. A print-data creation means in order to print image data to a printing paper, the data which adjusted the printing position of this image data, magnitude, the direction, and sequence to what is used as a booklet are created. A printing means it is characterized by printing the print data based on said print-data creation means in the format which uses the printing position, magnitude, the direction, and sequence as a booklet.

In a booklet creation system, the editing means is equipped, and with an editing means, an image can be colored, an alphabetic character can be written in, or it can carry out. Moreover, an alphabetic character and a picture can be arranged and printed also out of an image. A print-data creation means determines that this alphabetic character and picture will also serve as location optimal for booklet creation, magnitude, and direction. A print-data creation means creates print data which is the data for printing an image wherein the form for data origination is beforehand owned in the location which can bind a book, and in the directions and magnitude which user can chooses. Reading and editing the data and bookbinding electronic image data can be created and printed. The activity of this process can be done easily. In addition, the booklet creation system of this invention is also created a 1-page booklet and is also created a filed booklet which is included two or more pages.

A printing means prints image data to printing paper, and printing paper is characterized by having a slitting line and a bend line. By printing to the printing paper of the dedication which has a slitting line and a bend line beforehand, it can be easily made a booklet by bending by cutting after printing according to these lines. A matter required in order [such as a location of image printing, and a slitting line a bend line,] to bookbinding is decided beforehand, and cut printing paper and bend a position after printing in a paper and work attachment etc. and can carry out bookbinding. For example, an album can be created.

Usually, it is not easy for a user to set up the location of an image, magnitude, an array, etc. according to the purpose. This invention is characterized by printing so that bookbinding can be carried out easily, because an image may be arranged to the location suitable for printing, magnitude, a direction, etc. Therefore, if the image processing system of this invention is used, an individual user can set up print data easily and the album for which a book was bound can be created.

Moreover for a printing means, it is characterized by printing image data to printing paper, and this printing paper having a slitting and a bending line. The printing paper in which the slitting was done beforehand may be used. When there are a slitting and a bending line, after printing, according to this slitting and bending line, it separates and bookbinding can be carried out simply quickly by bending.

Printing means is characterized by printing image data, cutting deeply to printing paper and printing a line and a bend line. In case an image is printed, it is printed by coincidence, and a slitting line, a bending line, etc. can also be printed by this in forms other than printing paper. If it works along with these lines, an image will be printed by the optimal location so that it may become a booklet. In this case, it becomes an album-like thing by cutting the printed cutting location and bending the location used as the bending part. Then, an album is completed by sticking a cover and a back cover as a condition for which a book was bound.

It considers as a booklet of making from the printing paper on which the image data was printed with the printing means of this invention, and from bending with a slitting, and sticking a cover and a back cover. By the slitting and the bending line, it can collect into the condition of a booklet by separating and bending each image printing field. After this condition, it can be made to complete as a booklet by sticking a cover and a back cover.

The printing paper on which the image was printed with the printing means of this invention is separated, and then is stuck on the pasteboard. This method is another booklet creation. After printing two or more images to the print sheet of one sheet, it also can consider as a booklet by separating each and sticking on the pasteboard for booklet creation which filed beforehand. The attachment side of the pasteboard for booklet creation serves as adhesive tape, and a print sheet can be stuck by removing the releasing paper which covers the adhesive tape.

The storage which attaches the record medium which stored the image data is corresponding to the image with the booklet created by this invention. The storage shall be added to the inside of the front booklet cover. Record media, such as CD which stored the image data printed in the booklet for which a book was bound by this, can be contained.

The booklet creation system of this invention has a dynamic-image data origination means to create the dynamic-image data of an animation with which this frame is continuously displayed for a period based on the JPEG static-image data read from the external instrument as one frame from said JPEG static-image data.

Said dynamic-image data origination means is characterized by being what creates dynamic-image data which a static image exceeds 240x352 dots, and are displayed in the resolution of the range of 480x780 or less dots as MPEG dynamic-image data compressed by the compression method based on an MPEG method.

Many suited method is used as a slot which reads the electronic image data saved at the memory card, and memory card is used for said image data reading means. The format of reading data is a JPEG format and is equivalent to other compressed format.

Furthermore, a dynamic-image data origination means shall create dynamic-image data as MPEG dynamic-image data compressed by the compression method based on an MPEG method. Since it has compressed by motion compensation inter-frame prediction in the direction of a time-axis while encoding one frame in a frame, a static image is continuously expressed as the compression method based on an MPEG method. That is, in case the data of an animation which does not have inter-frame difference are compressed, compression of very efficient data is performed. Therefore, like this time, in carrying out fixed period continuation and displaying a static image, it also becomes possible to raise the resolution of a static image. That is, with this dynamic-image data origination means, static-image data can be changed as dynamic-image data, the resolution of delivery and the still picture which will be printed if it prints by sending to a printing means further can be raised for this dynamic-image data to a print-data creation means, and an image with sufficient resolution can be printed.

This invention is a printing paper used as a booklet by having a slitting line and a bending line, and two or more printing fields cutting deeply, and it being divided by a line and the bend line, cutting according to a slitting line, bending according to a bending line, and sticking a cover.

After finishing the printing on the position and a direction of a printing paper, a part of convention of a sheet is cut and the parts of creation and a convention are bent for a slitting. A user can do these activities easily. It becomes a book where an image is located in a line in order of a request according to this activity. Then, a booklet is completed by sticking a cover and a back cover as a condition for which a book was bound.

Two or more printing fields are the configurations of the shape of a long picture located in a line with the one direction, and this invention is a printing paper considered as bookbinding by having a bend line on each boundary of a printing field, bending on it according to a bend line, and sticking a cover on it. The field which prints an image etc. is divided by the bend line and can be bookbinding by bending this printing field after printing an image according to this bend line. By attaching to this printing paper that bent the cover, it becomes a complete booklet.

A print paper is good also considering each of a printing field as a square. Each of the printing field of a printing paper can take out a high-class feeling with the die length and width considering as an equal square or near square.

This invention is a printing paper with which it pushes with a perforation and the bend line by half cutting is located in a line by turns as a bend line. It can be made the image of bookbinding beautifully and quickly at appearance by pushing and using as "Fold toward you" the bend line by half cutting which attached the hollow for the perforation with "Fold away from you" and the projection.

Furthermore, a perforation and a micro perforation can also consider as the printing paper located in a line by turns as a bend line. By using a perforation as "Fold away from you" and using a micro perforation with a still finer eye as "Fold toward you", the part of a micro perforation is separated and it can finish finely.

Moreover, it is the printing paper characterized by this invention having either a perforation or a bend line pushing and according to half cutting as a bend line, and having penetrated said perforation to the thickness direction of said print sheet, having pushed and putting in said bend line by half cutting to an interstitial segment to the thickness direction of said print sheet. It becomes easy to separate by making a perforation penetrate. Moreover, by pushing and putting in the bend line by half cutting to an interstitial segment to the thickness direction, the part of a bend line is not separated, and it becomes easy to bend it, and it can be finished finely.

This invention is a printing paper made to rival by adhesives and a releasing paper adhering to a rear face, and exfoliating this releasing paper. If a releasing paper is removed after printing by attaching adhesives to the rear face of a printing paper, between each printing field rear face of a printing paper can be made to rival lamination or a cover immediately.

The printing paper of this invention attaches a core material in the rear face of printing paper. Reinforcement can be taken out with having attached the core material in the rear face although it is hard to give reinforcement only in printing paper. When a printing field is large especially, it is effective as an approach of raising reinforcement (when creating a big booklet).

This invention is a cover used as a booklet by being plate-like, being able to print, having a bending line, bending according to a bending line, and attaching in a printing paper. Since the cover of this invention is plate-like, it can be printed by a printer etc. Since there is a bending line, bending and a printing paper can be attached and it can consider as a booklet.

If the above booklet creation systems are used, after reading on a computer the electronic image photographed with the digital camera etc. and performing edit etc., it can print and can bookbinding easily and quickly. What vendor can be requested before and what took many days can carry out in about dozens of minutes. Moreover, the album with which the image was replaced can also be created easily and a book can be easily bound for it.

### [#2 Invention]

It is the booklet creation system of this invention in order to solve the above-mentioned technical problem.

It has a print-data output means located in a line with the longitudinal direction to the printing paper in the electronic image data incorporated by the image incorporation section with the electronic image data reading means to output print data to a printing means so that image printing may be made for two or more printing fields of every,

After the image printing section located in a line with the longitudinal direction of a straight side band-like print sheet is formed, it is characterized by planning considering as an album booklet by bending a printing paper longitudinally on the boundary between each of that printing field.

A print-data output means can capture an electronic image, can edit and process the image data, and it can output data so that an image may be printed to a printing paper longitudinally. As editing of an image and processing, an image can be colored or an alphabetic character can be written in. Thus, the processed image data is created as print data in the printing field of a straight band-like print sheet, and is outputted to the location which can bind a book as an album booklet, a direction, the sense of direction, and magnitude to it. A user can perform electronic image incorporation, editing, and an output for easy and a short time and a booklet can be created. Therefore, it is suitable also for creating many booklets and an individual user is good also for carrying out. Moreover, since it prints directly to the printing paper used as a booklet, a high-class feeling can be taken out rather than it sticks the printed paper on the pasteboard used as a booklet.

Furthermore, after printing the booklet creation system of this invention only to some fields among two or more printing fields of a printing paper longitudinally, it can choose and print the field which is not printed. That is, in case print data are printed to a printing paper longitudinally, it prints to the printing field of arbitration, and printing can once be ended and print data can be further printed to the field of the remainder which is not printed. This incorporates the image data which photography ended, it prints in the location of the arbitration of a printing paper and the image data photographed further later can be incorporated and printed. For example, the nuptial photograph is printed by the attendant, after a formula is completed, and if it is made to carry out additional printing of the photograph of a wedding reception, time amount can be used effectively to create many booklets, after a wedding reception is completed. Since the printing field which is not printed can be chosen and printed, many booklets can be created in this way in a short time.

Furthermore, the booklet creation system of this invention prints some print data to the printing field of the first printing paper longitudinally, and prints residual print data to the printing field of the second printing paper longitudinally.

The printing field rear face of the termination of the first printing paper longitudinally and the printing field rear face of the start edge of a second straight side band-like printing paper are stuck, and are assembled, and it considers as a booklet.

The case where no images can be printed arises in the printing field of the first printing paper longitudinally to print many images. In such a case, by printing the image which was not able to be printed to the second printing paper longitudinally, and sticking the rear face of the printing field of the termination of the first printing paper longitudinally, and the rear face of the printing field of the start edge of the printing paper of the shape of second straight side, many images can be printed and it can consider as a booklet.

The booklet creation system of this invention can form the adhesive layer for lamination in the rear face of a printing paper longitudinally, and can print it to a printing field after that. Or after printing to a printing field, the adhesive layer for lamination can be formed in the rear face of a printing paper longitudinally. By forming in the rear face of a print sheet after printing [before printing an adhesive layer], the printed sheet is simply bent and can be stuck.

The booklet creation system of this invention can have the cutting section which cuts the boundary between the printing fields of a printing paper longitudinally. For example, the cutting section can cut after printing to the printing field of the printing paper longitudinally which have the printing field of a large number rolled in the shape of a roll. According to such a system, the booklet of the die length (pagination) of arbitration can be created. You may make it cut before printing, of course.

After the printing paper of this invention longitudinally has two or more printing fields located in a line with the longitudinal direction and prints print data to a printing field, it is for bending on the boundary between the printing field, and making it a booklet. If it bends on the boundary between printing fields and a rear face is stuck after printing print data to two or more printing fields located in a line with the longitudinal direction, it can consider as a booklet. Since the printing paper with which the image was printed serves as a page of a booklet as it is by bending, a booklet can be completed in a short time.

It has a joint at the long side edge at least, and the printing paper longitudinally which two or more printing paper longitudinally join in juxtaposition by the joint can also be used. By two or more joints, it is made to join in juxtaposition and a longitudinal direction is provided with the printing paper longitudinally with which a printing field is located in a line with a single tier as one print sheet. For example, if the printing paper of 3 reams is combined, and it considers as one print sheet and is made to print to 3 train coincidence, printing time amount can be shortened. Although joined by two or more joints, if a joint is prepared in the edge of a longitudinal direction at least, in case it will insert in a printer and an each straight side band-like print sheet will be printed, it can prevent the printing position shifting, without fixing a print sheet edge.

The printing paper of this invention further longitudinally has an adhesive layer at the rear face of a printing paper longitudinally, removes the releasing paper which covers the adhesive layer, sticks rear faces, and creates a booklet. If it is made to have an adhesive layer at the printing paper rear face, you remove a wrap releasing paper for an adhesive layer after printing, and make it stick each other's rear faces, and it can be made a booklet simple.

It bends on the boundary between two or more printing fields, the datum-line section is created by the printing paper, the printing field is divided, and it bends in the bending datum-line section after printing print data to a printing field, and considers as a booklet. Between each printing field, beforehand, if the bending datum-line section for bending is created, after printing, it can bend easily and can consider as a booklet. Or it bends on the boundary between [after printing print data to the printing field of a print sheet] printing fields, and the datum-line section is created and you may make it bend in the bending datum-line section.

The printing paper of this invention has even printing fields, uses them as "Fold away from you" in said odd-numbered bending datum-line section from an end, is used as "Fold toward you" in the even-numbered bending datum-line section, is assembled by sticking the rear face of a printing field, and creates a booklet.

In the first bending datum-line section between the first printing field and the second printing field, the "Fold away from you" is made. Then, in the second bending datum-line section between the second printing field and the third printing field, the "Fold away from you" is made. Thus, in the odd-numbered bending datum-line section, it can be made "Fold toward you", it can be made "Fold away from you" in the even-numbered bending datum-line section, and can consider as a booklet by sticking a rear face. A cover is most stuck on the rear face of the first printing field and the rear face of the last printing field, and it can do with a booklet.

The above-mentioned bending datum-line section is a perforation, and bending becomes easy to carry out it between each printing field by this perforation. Moreover, the bending datum-line section may not be restricted to a perforation, but it may push and they may be a micro perforation, a bend line by half cut, etc.

The printing paper of this invention has the adhesive layer formed by the binder which has the adhesion which can maintain a lamination condition, without a field exfoliating in part, and exfoliates for correction of a lamination location, and can carry out lamination again, after sticking rear faces. Since it has an adhesive layer at the rear face, it can do with a booklet easily by exfoliating a releasing paper and sticking rear faces. However, when sticking rear faces, shifting and sticking may also happen. Then, again, if an adhesive layer is formed with the binder of weak adhesion, between rear faces can be stuck so that it may not exfoliate and shift.

More specifically, a tack forms an adhesive layer in the printing paper which is 180 micrometers or more in two or more basis-weight 100 gr/m² and thickness with the binder which are 12Ns / 25mm or less. The thickness of printing paper has desirable about 500 micrometers or less for using it by the general-purpose printer. If the printing machine of dedication performs, it is possible also by the thickness beyond it. Moreover, when printing paper rear faces are stuck, in order to be able to maintain the condition of lamination, without a field exfoliating in a part, it is desirable for there to be adhesion (2Ns / 25mm or more). If the printing paper of this basis weight and thickness is used, it can do with a good-looking booklet with sufficient strength and thickness. And when the location of lamination and lamination shifts, in order to exfoliate and to stick such printing paper again, it is necessary to use the above binders. Redo of lamination can be performed with such a binder of weak adhesion.

After the cover for booklet creation of this invention bends the printing paper of a publication longitudinally on the boundary between printing fields, it is equipped with the fly leaf for sticking the printing field rear face of the end of a said straight side band-like printing paper, and the printing field rear face of the other end between the cover and the back cover.

It sticks on the cover for booklet creation, after bending a printing paper longitudinally and sticking it. It has the fly leaf between the cover and the back cover, and the cover for booklet creation can stick the bent end and the bent other end of a printing paper on this fly leaf, and can be completed as a booklet.

### [#3 Invention]

To solve said problems, printing paper of this invention has the characteristic that it has a plural number assigned on one piece of seat equally and a page area of the same type for print and ranges with the Y direction that is a right angle so that each page area can devote itself with an X direction, and "Fold away from you " line which is cutting Line, "Fold toward you" line which are "Fold toward you" bending Line, "Fold away from you " line dividing said page area next to each other along some borders of a border where page area is formed and that with "Fold toward you" line and "Fold away from you " line, there are something for a right angle and position relation each other at least in an X direction and a Y direction, and after it is considered to be one booklet by bending in turn at "Fold toward you" line and "Fold away from you" line.

On one piece of printing paper, I have plural page area. Each page area can print images. In other words, on one piece of printing paper, I can print plural images. Each area is size the same with the same shape. In addition, it ranges in X direction and this in the Y direction that is a right angle. To printing paper, cutting Line, "Fold toward you" line for "Fold toward you" bending Line, "Fold away from you "line for "Fold away from you" bending Line dividing a page area next to each other are formed.

After printing, with cutting Line, it divide a page area and use "Fold toward you" line and "Fold away from you" line and break it and do bending and adhere the back side and can do it with one booklet. It take very short time to make the booklet by oneself which has the cutting line and "Fold toward" line and "Fold away from you" line and also to make the booklet which is directly printed images on paper and bended by hand. A booklet has a feeling of high quality so that a method to print to printing paper directly is taken so that, in addition, it is put in a high quality booklet cover made beforehand.

Said cutting line formed in plural page areas divides a page area next to each other and penetrate in a thickness direction of paper and have connection section to connect said page area which adjoins each other in the predetermined part of longitudinal direction of the penetration slot.

The cutting line has both of connection section and penetration slot. The slots are separating page areas next to each other, and separated page area is connected by connection section. The connecting section is formed limited area in cutting line. So it is possible to separate the connecting line by hand. By doing this, it is possible to make separation by hand between page area next to each other.

In the printing paper, leftover region is formed partly which is not as same as a page area, and the said leftover region is separated after printing, and is assumed a booklet. For example, if the square page area is formed in rectangle, the leftover region is formed which is not as same as page area. This leftover region is separated and the booklet is made by bending the page areas which is used "Fold toward you" and "Fold away from you" lines.

Most of the printers have the problem to make the edge of the printing paper dart. If you make said leftover region intentionally, we can use most of commercial printer and can print any page area without any problem.

Printing paper is either a rectangle or a square, and each page of m line and n row [ m , n: integer] is consisted of the same page areas and between (a) line of said page area and (a +1) line of said page area [( a ), odd number] it is established cutting line from the second line to n line and in (a +1) line of said page area and (a +2) lines of said page area, it is established cutting line from the first line to (n-1)line.

The booklet is made by bending "Fold toward you" line at said page area and "Fold away from you" line at said page area and cutting it off at the said cutting line. It is explained more to be concrete. For example, three lines and each four rows of size explain it with the printing paper that the same page areas formed. Between first line of said page area and 2^{nd} line of said page are, and between 2^{nd} line of said page area and 3^{rd} line of said page area, it is established cutting line from 1^{st} row to 3^{rd} row. It is cutting off by cutting region and bended by "Fold toward you" line and "Fold away from you" line between page areas. The numbers of page area is not restricted by 3 lines and each 4 rows.

And it is cutting off in cutting line and touch a page area number in each page area that is next from the second line to the second line four lines from four lines of following the third line in order of one line of the first line from four lines of the first line in turn.

It is having "Foid away from you" line in a border of a page area of an odd number joint and the next page area and, in a border of a page area of an even number joint and the next page area, have "Fold toward you" line. In this way it is bending "Fold toward you" line and "Fold away from you" line to have in turn sequentially and can make a booklet.

Printing paper which is made a booklet by turning "Fold toward you " and "Fold away from you" along "Fold toward you" line and "Fold away from you " line made in a border of plural page areas, and which is formed by the carrying that said "Fold toward you" line and "Fold away from you" line can distinguish visually. For the purpose of visual distinguish, for example, it is used to make different coloring "Fold toward you "line and "Fold away from you" line. To use this coloring method, it is easy to make "Fold toward "line and "Fold away from you "line without fail.

The printing paper has "Fold toward you" line ditch structure of bottom and has a bottom of the non-cutting department "Fold toward you" so that a ditch opens as the fulcrum, and is made so that the ditch inside of the ditch structure almost becomes a plane each other at end face.

"Fold toward you "line is made by press or by V cutting method and it has the ditch structure. So each page areas is connected without cutting off.

The printing paper is keeping sheet condition and is possible to print by commercial printer. The ditch structure makes easy to bending. "Fold toward you" which is opened as the fulcrum becomes a plane each other at end surface. The booklet is completed and the outlook of booklet keeps good face quality.

The printing paper has a page printing area in surface, and, in a border of said page area, "Fold away from you" line and "Fold toward you" line are formed. At the rear side of said paper, releasing paper has cover up adhesion layer. Said releasing paper has a break in a neighborhood of "Fold away from you" line or in a neighborhood of "Fold toward you" line. When doing "Fold away from you" and "Fold toward you", it makes easy that said releasing paper has exfoliate from said adhesive layer in said break by the shape changing force from bending the paper.

It is possible to make the booklet using the printed printing paper which has the adhesive layer to affix and releasing paper covering adhesive layer at the rear side, and make peel off the releasing paper and make adhesion together. Said releasing paper has a break in a neighborhood of "Fold away from you" line or in a neighborhood of "Fold toward you" line. When doing "Fold away from you" and "Fold toward you", it makes easy that said releasing paper has exfoliate from said adhesive layer in said break by the shape changing force from bending the paper. It makes booklet that peel off the releasing paper and use the adhesive layer for adhesion and make adhesion together at the rear side of page area.

It is the same as the second invention that the adhesion layer is formed on the rear side of printing paper. In addition, the material of adhesion layer uses a thing as same as second invention.

### [#4 Invention]

A booklet cover of the present invention aimed at solving the above described problems comprises: a back cover component configuring a back cover of a booklet; a first cover component adjacent to the back cover component, as being spaced by a gap; an assist component adjacent to the back cover component on the side opposite to the first cover component, as being spaced by a gap, and having a width narrower than that of the back cover component; and a second cover component adjacent to the assist component, as being space by a gap, wherein the individual components are bound in an integrated manner while keeping the gaps, and are foldable at the individual gaps.

Because the back cover component, the first cover component, the assist component, and the second cover component are bound in an integrated manner while respectively keeping the gaps therebetween, the booklet cover is made foldable at each gap. The individual components may be bound as being mediated by linkage components so as to form the gaps, or may be bound using a tape or the like.

The booklet cover also includes a wrapping structure wrapping the back cover component, the first cover component, the assist component, and the second cover component in an integrated manner. Using the wrapping structure, the individual components are wrapped while keeping the gaps therebetween, to thereby form the cover. The wrapping structure can be exemplified by those composed of paper, vinyl resin, cloth, leather and so forth. It is also allowable to use the wrapping structure having any favorite color and pattern. Choice of the wrapping material based on user's favor allows the user to fabricate booklets with a variety of tastes, depending on the material and color of the wrapping structure.

A booklet is fabricated by attaching a fold section, which comprises sewed printed sheets of paper, to the booklet cover. The booklet is completed by attaching the first page, and back surface of the last page of the fold section onto the inner surface of the booklet cover. The attachment may also be accomplished typically by forming a adhesive layer on the inner surface of the booklet cover, as being covered with a release paper, and by peeling the release paper off to thereby effect adhesion with the aid of the adhesive layer. It is also allowable to preliminarily form the adhesive layer on the printing paper, and to effect attachment with the aid of the adhesive layer. The booklet cover, configured as being foldable between every adjacent components, is readily foldable after being made up as a booklet, and in particular the configuration of the booklet, allowing folding between the assist component and the back cover component, and between the assist component and the second cover component makes the booklet more expandable.

It is also allowable to provide a page insertion bag, in which the end page of the fold section is inserted, on the inner side of at least one of the first cover component and the second cover component. The fold section is attached to the booklet cover, by inserting the first page and the last page thereof into the page insertion bag. The page insertion bag configured using a transparent material (vinyl resin, for example) makes the inserted first page and the last page visible. Provision of such page insertion bag makes it no more necessary to paste the first page and back surface of the last page of the fold section with the aid of the adhesive layer. Moreover, taking the first page and the last page of the fold section out from the page insertion bag makes it possible to detach the fold section from the booklet cover, and this makes it ready to replace the booklet cover with a different one.

A printing paper of the present invention aimed at solving the above-described problems comprises: a sheet having, on the surface thereof, page regions allowing printing, and having at least a "Fold toward you" line and a "Fold away from you" line formed at the boundary of the page regions; a adhesive layer formed on the back surface of the sheet; and a release paper covering the adhesive layer, and having both of, or either one of a first release-assist formation line configured by a slit which extends from the "Fold toward you" line or the "Fold away from you" line formed at the boundary between an arbitrary page region and the adjacent page region towards the adjacent page region adjacent thereto, and projects out from the arbitrary page region, and a second release-assist formation line configured by a slit which extends from the "Fold toward you" line or the "Fold away from you" line towards the arbitrary page region, and projects out from the adjacent region,
wherein a part of the release paper lifts up from the adhesive layer at the release-assist formation line, by fold deformation in a "Fold away from you" manner at the "Fold away from you" line or in a "Fold toward you" manner at the "Fold toward you" line, and the release paper is peeled off from the adhesive layer as being initiated therefrom.

A configuration such that the adhesive layer is formed on the back surface of the printing paper is the same as the second invention. Also the adhesive used herein is the same as that used in the second invention.

The release paper covering the adhesive layer has, formed thereon, the "Fold away from you" line and the "Fold toward you" line formed at the boundary of the page regions, and has, also formed thereon, the release-assist formation line which extends from the "Fold toward you" line or the "Fold away from you" line. The release-assist formation line is a slit formed in the release paper, and from such release-assist formation line, the release paper can be peeled off. Folding of the printing paper at the "Fold away from you" line or at the "Fold toward you" line results in lift-up of the release paper at the release-assist formation line, due to weakness of the adhesive force of the adhesive layer. Picking up of the lift-up portion facilitates peeling-off of the release paper.

On the printing paper, it is also allowable to form a label region in which a title is printed, out of the page region. This configuration allows printing of the title of the booklet, at the same time with printing of images and so forth in the page region. The label can be placed on the cover or the back cover of the booklet.

### [#5 Invention]

### [Means for Solving the Problem and its Function and Effect]

It is a static-image data reading means to read the JPEG static-image data compressed by the compression method by which the image recording medium creation system of this invention is based on a JPEG method from an external instrument in order to solve the above-mentioned technical problem.

A dynamic-image data origination means to create the dynamic-image data of an animation with which this frame is continuously displayed for a period considering the static image based on said JPEG static-image data as one frame from said JPEG static-image data. An image recording medium creation means to record on the compact disk (CD) as an image recording medium where said dynamic-image data and music data which were created are combined is included.

A dynamic-image data origination means is characterized by being what creates dynamic-image data which a static image exceeds 240x352 dots, and are displayed in the resolution of the range of 480x780 or less dots.

According to the above image recording medium creation structure of a system, as a dynamic image with which the same image is continuously displayed in a static image, when the dynamic-image data of a dynamic image are saved at a compact disk (CD), the resolution of a dynamic image can create about the same compact disk as DVD. Namely, rather than the conventional VCD, the resolution of a static image (animation which seems to stand it still) can be raised, and a high definition static image (DVD average) can be displayed on display devices, such as a monitor.

Furthermore, a dynamic-image data origination means shall create dynamic-image data as MPEG dynamic-image data compressed by the compression method based on an MPEG method. By the compression method based on an MPEG method, in case a static image is displayed continuously, that is, the data of an animation which does not have inter-frame difference are compressed since it has compressed by motion compensation inter-frame prediction in the direction of a time-axis while encoding one frame in a frame, compression of dramatically efficient data is performed. Therefore, like this time, in carrying out fixed period continuation and displaying a static image, it also becomes possible to raise the resolution of this static image.

Furthermore, a dynamic-image data origination means creates the dynamic-image data which displayed the static image in the resolution of 480x704 dots. The image recording medium which is such a compact disk (CD) of this invention is dramatically cheap compared with a DVD disk, and can reproduce the high-definition image which is equal to DVD.

Furthermore, since dynamic-image data are recorded on a compact disk (CD) by the method based on an MPEG method, this CD is reproducible by the playback device corresponding to MPEG methods, such as for example, a DVD player. Therefore, an image can be enjoyed on home television through a DVD player etc. the compact disk as an image recording medium created by the image recording medium creation system of this invention. In addition, the static image based on two or more JPEG static-image data in the dynamic image reproduced based on MPEG dynamic-image data is reproduced in order at fixed spacing (at slide type).

The image recording medium creation means of this invention is characterized by being what records JPEG static-image data on CD with dynamic-image data. As image data, if the JPEG static-image data compressed by the JPEG method are also saved with dynamic-image data to such [for example,] an image recording medium like CD, while being able to appreciate the animation based on MPEG dynamic-image data to it on home television, for example through a DVD player etc., in a personal computer etc., appreciation or editing can make it the static image based on JPEG static-image data. That is possible to be enjoyed by home television and a personal computer with one sheet of CD.

Dynamic-image data are characterized by displaying the static image with which the plurality based on said two or more JPEG static-image data differs on fixed period sequence, respectively. The dynamic-image data recorded on CD should display two or more static images based on two or more JPEG static-image data read from external instruments, such as a digital camera and a scanner, on fixed period sequence, respectively. Thereby, various static images can be displayed in a slide format.

An image can be seen by making music data link to the electronic album which collected electronic images, listening to music at the time of appreciation of an electronic album. For this reason, after reading an electronic image into an image recording medium creation system, a user chooses the music made to link to the electronic album to create. There is an approach of choosing from the existing music as the selection approach or the approach of newly creating music using a composer. As an approach of choosing from the existing music and incorporating on an electronic album, the approach of choosing from the data saved at archive media, such as the approach of downloading from the Internet, the approach of choosing from the music saved beforehand softly, and CD, etc. is mentioned, for example.

In order to create new music, there is also the approach of using the composer included in the image recording medium creation system. The music data of this invention are characterized by being created by the composer who makes new music by connecting the vibrant tune of two or more music classified according to the music tone.

A composer is what built in the data of music, and composes new music by using some of music data. The group division of music is beforehand carried out by the theme of music, a music tone, Tempo, etc. And by choosing a suitable theme as the electronic album which a user creates, a composer selects a number vibrant tune out of one vibrant tune of the data of a certain music by which the group division is carried out as the theme, a composer selects a number vibrant tune out of one vibrant tune of the data of another music, and the selected vibrant tune is connected. Also after that, from one other vibrant, the number vibrant tunes is selected and connected from another music by which grouping is similarly carried out to this group. The music connected and created turns into new music which is not until now. This way of choosing has the description that music different each time is created, even if a user chooses the same theme, in order that a composer may select the part of the arbitration of the music of arbitration at random. More over, the grouping also in consideration of Tempo or a music tone carries out ,the more natural music is created.

Moreover, it can make a composer able to make an automatic judgment of the music suitable in an image from the hue (for it to be bright, or to be dark, or for them to be a warm color system, a cold color system, etc.) of the read image instead of the approach of choosing a theme, or the time of photography, and can also make music create.

The music data of this invention count the number of sheets of the photograph which indicates by sequential, calculate the whole display time, and are characterized by generating the music of the die length corresponding to the display time of the whole by selection or come from the composer.

A dynamic-image data origination means calculates the display time of two or more of said dynamic-image data to display by the performance time of music, and it creates the display time of said dynamic-image data so that said dynamic-image data may be displayed according to display time. When a performance of music data is completed, simultaneously two or more dynamic-image data may be completed.

The die length of the created music is determined according to the number of images held in the electronic created album. It is created so that it may become the music of suitable die length to appreciate all images by the slide formula. Moreover, when the existing music is chosen, an image recording medium creation system is able to decide on the time amount per CD in case a slide type is reproduced according to the die length and the number of images of music. While listening to the music and being able to appreciate an image, termination of an image appreciation and musical performance termination can be made simultaneous.

In this way, the created or chosen music data are incorporated as some data of the electronic album which is created by the image recording medium creation system. It becomes possible to appreciate on a monitor the image data which is a still picture with music as a dynamic image with which the same image is displayed continuously. It is compressed by the compression method based on an MPEG method, it also becomes possible to raise the resolution of a static image, in carrying out fixed period continuation and displaying a static image, and this dynamic-image data can appreciate the image of an electronic album by the beautiful image.

When this invention prints image data, it is characterized by recording printing image information. After completing as an electronic album with music, an image can be printed by the printer. A user is able to print which image at this time, or to choose, and which image was chosen and printed, or by an image recording medium creation system, is able to record. Therefore, it is recognized easily and can print the image which wants to print the same thing, later and can print the image which is not printed.

This invention is the image recording medium creation system with music which has the function of effect processing. In case that it creates as MPEG dynamic-image data, it is also possible to perform effect processing of not changing one after another simply, but the following image being set from a four way type, making a change of each image appreciated in a slide format, appearing, or the next screen appearing and being set from both sides, etc. It becomes that to which the change of an image was rich in change with this processing. By including in the image recording medium creation system beforehand, the pattern of this processing can be processed by which pattern, or a user can choose it easily.

This invention is an image recording medium with music characterized by being the compact disk created by the image recording medium creation system. It is also possible to record an electronic album with music on archive media, such as CD, in the above-mentioned image recording medium creation system. In this case, since not only image data but music data are saved together, it is also easy to distribute the completed electronic album with music.

This invention is an image recording medium as a compact disk recorded combining dynamic-image data and music data of an animation with which a static image is continuously displayed for a certain period.

It is the image recording medium with music characterized by for a static image exceeding 240x352 dots, and displaying said dynamic-image data in the resolution of the range of 480x780 or less dots. It can be enjoyed by recording on a compact disk, appreciating music for a high-definition image, which is cheaper than a DVD disk.

### [Brief Description of the Drawings]

[Fig. 1] The explanatory view showing the outline of the image processing system of #1 invention
[Fig. 2A] Drawing showing the display screen at the time of editing an image
[Fig. 2B] Drawing showing the editing
[Fig. 2C] Drawing showing the display screen at the time of delete and replace
[Fig. 3] The flow chart which shows a process until it prints an image
[Fig. 4A] The example 1 of #1 invention
[Fig. 4B] Drawing showing the bended paper
[Fig. 4C] Front cover and rear cover
[Fig. 5A] The example 2 of #1 invention
[Fig. 5B] Attaching of printing paper to the pasteboard
[Fig. 5C] Explanation of coloring to the pasteboard
[Fig. 5D] Explanation of cover
[Fig. 6] The example 3 of #1 invention
[Fig. 7A] Drawing showing the detail of an example 3
[Fig. 7B] Structure of printing paper of example #3
[Fig. 7C] Explanation of bending method
[Fig. 7D] Other structure of printing paper #3
[Fig. 8A] Drawing the cover for considering as a booklet, and bookbinding
[Fig. 8B] Inside of cover
[Fig. 8C] Bookbinding structure

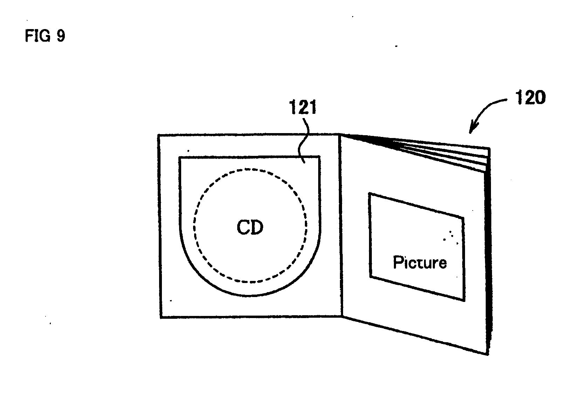

[Fig. 9] The example of the booklet which can attach CD etc.
[Fig. 10A] The example of the printing paper of #2 invention
[Fig. 10B] Structure of printing paper
[Fig. 10C] Explanation of bending method
[Fig. 10D] Other structure of printing paper #2
[Fig. 11A] Bending of printing paper, adhesive layer, drawing explaining a releasing paper
[Fig. 11B] Explanation of bending structure without perforation
[Fig. 11C] Explanation of adhesive of rear side
[Fig. 11D] Other Explanation of adhesive of rear side
[Fig. 11E] Explanation of releasing paper
[Fig. 12A] Drawing explaining a printer
[Fig. 12B] Explain the other printer
[Fig. 13A] Drawing explaining creation of a booklet with printing paper and the cover for booklet creation
[Fig 13B] Cover of booklet
[Fig. 13C] Coloring of booklet cover
[Fig 13D] Showing to make booklet
[Fig. 14] The example of the printing paper which two or more print sheets longitudinally joined
[Fig. 15A] Drawing explaining the printing sequence of an image
[Fig. 15B] Explaining the additional printing
[Fig. 15C] Explaining other printing sequence
[Fig. 16A] Explaining printing paper
[Fig. 16B] Explaining connecting of a printing paper
[Fig. 16C] Explaining connecting of a printing paper
[Fig. 17] Explaining #3 invention
[Fig. 18A] Other application of #3 invention
[Fig. 18B] Another application of #3 invention
[Fig. 19A] Explanation of bookmaking after printing
[Fig. 19B] Explanation of bookmaking following 19A
[Fig. 20A] Explanation of bookmaking following 19B
[Fig. 20B] Explanation of bookmaking following 20A
[Fig. 20C] Explanation of bookmaking following 20B
[Fig. 21] Explanation of connecting of printing paper
[Fig. 22A] Explanation of the structure of printing paper and bending portion 1
[Fig. 22B] Explanation of the structure of printing paper and bending portion 2
[Fig. 22C] Explanation of the structure of printing paper and bending portion 3
[Fig. 23A] Explanation of half cutting structure
[Fig. 23B] Explanation of half cutting structure
[Fig. 23C] Explanation of half cutting structure
[Fig. 24A] Explanation of Cover
[Fig. 24B] Explanation of coloring
[Fig. 24C] Explanation of bookmaking
[Fig. 25A] No 4 Application of #3 invention
[Fig. 25B] No5 Application of # 3 invention
[Fig. 26A] Application of longitudinal printing paper
[Fig. 26B] Bending of longitudinal printing paper
[Fig. 27A] Application of #4 invention
[Fig. 27B] Rear side of Application of #4 invention
[Fig. 28] Explanation of structure of bending position
[Fig. 29A] Explanation of releasing method of releasing paper
[Fig. 29B] Explanation of releasing method of releasing paper
[Fig. 30A] Explanation of cutting line on releasing paper
[Fig. 30B] Second other Explanation of releasing method of releasing paper
[Fig. 31A] Explanation of cutting line on releasing paper
[Fig. 31B] Third other Explanation of releasing method of releasing paper
[Fig. 32] Second application of printing sheet
[Fig. 33] Third application of printing sheet
[Fig. 34A] Explanation of cover making process
[Fig. 34B] Explanation of cover making process
[Fig. 34C] Explanation of cover making process
[Fig. 34D] Explanation of cover making process
[Fig. 35A] Side view of book cover
[Fig. 35B] Explanation of bookmaking
[Fig. 36A] Explanation of book opening
[Fig. 36B] Explanation of book opening
[Fig. 37] Explanation of labeling
[Fig. 38A] Explanation of other cover structure having pocket
[Fig. 38B] Explanation of other cover structure having pocket
[Fig. 39] The explanatory view showing the outline of the image recording medium creation system of #5 invention
[Fig. 40A] Showing the display screen at the time of a static image editing
[Fig. 40B] Showing the editing
[Fig. 41] The flow chart which shows the creation process of an image recording medium
[Fig. 42] The flow chart which shows S12 of Fig 41 to a detail
[Fig. 43] Drawing showing the display screen of the theme chosen in case of music is created by the composer

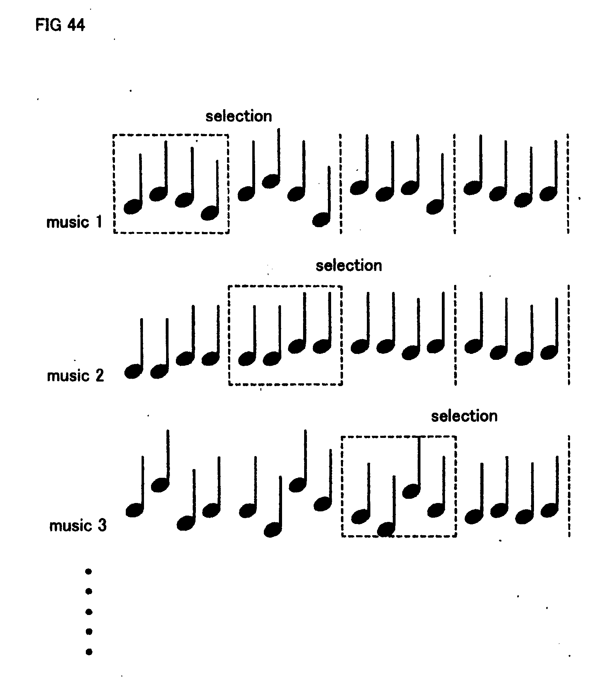

[Fig. 44] Drawing showing the concept to choose a composer's vibrant tune
[Fig. 45] Drawing showing the change rate of a dynamic image
[Fig. 46] Drawing explaining the processing which creates MPEG dynamic-image data from JPEG static-image data

### [Embodiment of the Invention]

### [#1 Invention]

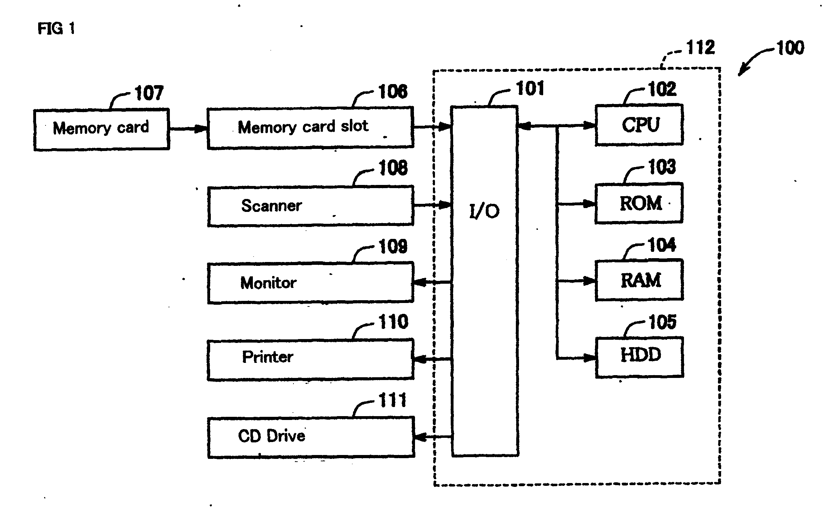

Fig. 1 is a block diagram explaining the outline of an image processing system 100. Through the computer 112 and I/O Port 101 which have CPU102, ROM103, RAM104, and HDD105, the input device and output equipment of the slot 106 for memory card, a scanner 108, a monitor 109, a printer 110, and CD drive 111 grade are connected, and the image processing system 100 is constituted. Application software is saved in HDD105, by starting, is memorized in RAM104 and operates.

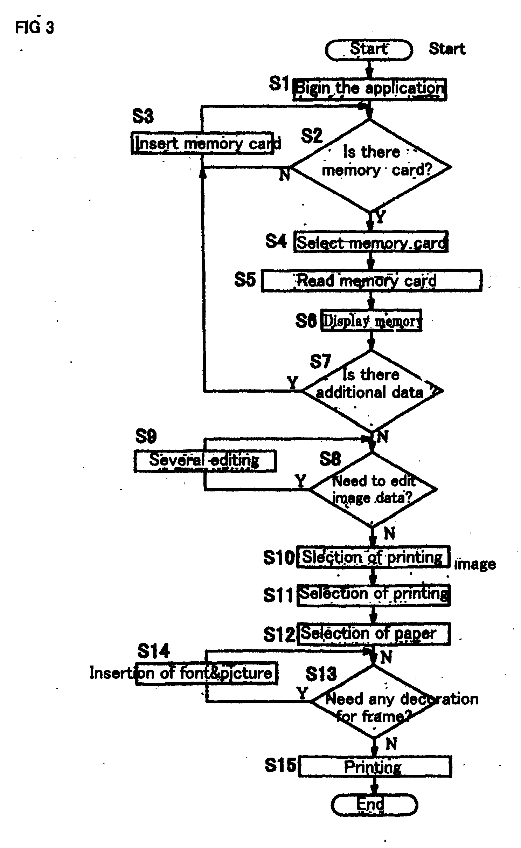

After turning on the power source of a computer 112, the application software of this invention is started (S1 of Fig. 3). Next, the image data currently recorded on memory card 107 is read from a slot 106, and deletion, an addition, and edit of an image will be performed continuously. The slot 106 for memory card is connected to the computer 112, image recording media containing the static image photographed with the digital camera etc. to edit, such as Compact Flash (trademark) and Smart Media are inserted in the slot 106 for memory card, and image data is read. At this time, all the images saved at the record medium are read. The read image data is displayed on the monitor 109 of a personal computer.

It judges whether memory card 107 is contained in the slot 106 for memory card after starting application software (S2). When not inserted, memory card 107 is inserted in a slot 106 by S3. In case image data is read from memory card 107, it will read from which memory card 107, or the class of memory card 107 will be chosen (S4). Application software performs selection of memory card 107. When computer with a touch panel function, selection of said memory card 107 can be performed when user touch the location where it corresponds on a selection screen by the finger or the bearing bar of dedication. When operating application by computer to which the touch panel function is not attached, it can carry out by clicking an applicable part with a mouse.

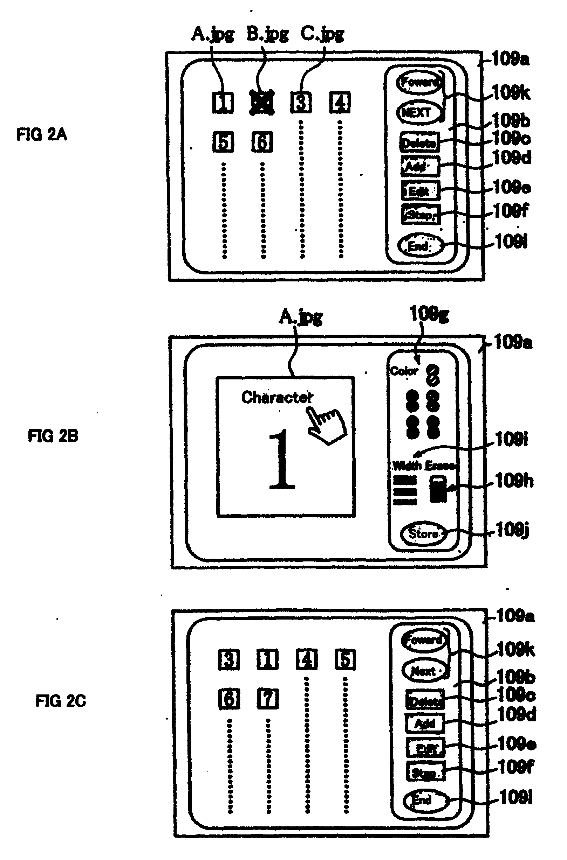

Read-out of (S4) and image data is performed after selection of memory card 107 (S5). If read-out is completed, an image will be displayed on a monitor 109 (S6). When it judges whether there is any addition of image data (S7) and there is an addition of image data further, Add button 109d of Fig. 2A is chosen, and it moves to said process of S3. The image data saved at another memory card 107 newly inserted in the slot 106 by this is recorded on the image data memory of RAM104 with the image data read previously temporarily. And the image based on the added image data is displayed with the image previously read into display screen 109a of Fig. 2A.

It is also possible to edit the read image (S8). An image to edit is chosen when editing. The selected image is that which is greatly displayed on a monitor (Fig. 2B), and an alphabetic character can be attached or it can draw a line there. Moreover, coloring processing etc. can be performed in an image, for example, the ambient atmosphere of an image can also be changed as sepia (S9).

The method of edit of an image is explained. An image to edit an alphabetic character into is chosen in the display screen shown in Fig. 2A. After specifically pushing Edit button 109e currently displayed on actuation frame 109b of display screen 109a, an image to edit from the image (1, 2, 3) currently displayed is chosen. After selection of editing image is completed as shown in Fig. B, only the selected image is large and is displayed on display screen 109a of a monitor 109 (Fig. B shows display screen 109a at the time of choosing an image 1). And in attaching an alphabetic character to an image 1, in 109g of color selection fields currently displayed on actuation frame 109b, the favorite color suitable for an image 1 is chosen, with a finger or the indicator rod of dedication, when that is not right, in the case of a computer with a touch panel function, a display screen top is traced with a mouse, and it gives an alphabetic character suitably on an image 1. A favorite alphabetic character can be formed also changing the color of a line depending on the case choosing the size of a suitable line from size field 109i of a line, or choosing 109h of rubbers etc. suitably on the occasion of grant of an alphabetic character. Moreover, decoration etc. can also be given to not only an alphabetic character but an image. If edit is completed, Store button 109j will be chosen, and editing operation is ended.

Unnecessary image data can be deleted and excluded among the read image data (S10). In deleting an unnecessary image, after choosing Delete button 109c in actuation frame 109b in the display screen shown in Fig. 2 A, an image unnecessary on display screen 109a can be performed by choosing with a finger, the bearing bar of dedication, or a mouse. To the image judged to be unnecessary by this selection, the displays (for example, x mark etc.) of the purport which shows that it is deleted are given on the display screen. In addition, deletion of an image can be canceled by choosing again the image chosen as it is unnecessary with a finger, the bearing bar of dedication, or a mouse.

Furthermore, in S11, the sequence of printing of the image printed as an album can also be changed. In display screen 109a of Fig. 2A, Step button (109f) currently displayed on actuation frame 109b is chosen, and the image with which sequence is replaced is chosen after that. And in the condition of having chosen the image to replace, by choosing suitably Forward button in actuation frame 109b, or Next button 109k, it can be made to be able to move on the display screen and the selected image can be set up in favorite sequence. The 2nd image is deleted to Fig. 2C, and the example at the time of replacing the 1st and the 3rd sequence is shown.

The application software which is an image processing system will create print data, and will send data to the printer so that an image may arrange on the album of completion in this specified sequence. It is also possible to specify a print sheet (S12), to insert an alphabetic character in the margin part of image printing of pasteboard or the printing paper, or to insert an illustration in it outside an image that is, further. When performing these ornaments (S13), an alphabetic character, a picture, a frame (frame), etc. are inserted by S14. The frame is beforehand included in application software, and when a user chooses from the inside, it can be set up easily.

In the example of this invention, the dynamic-image data origination means is equipped, and, thereby, the resolution of an image can be raised and printed. Termination of all editing operation creates MPEG dynamic-image data from JPEG static-image data with this dynamic-image creation means. At this time, CPU102 reads the data origination program stored for example, in HDD105, and starts a program by RAM104. In the case of this operation, CPU102 and a data origination program are dynamic-image data origination means. The MPEG dynamic-image data created by the dynamic-image data origination means are temporarily recorded on the image data (MPEG) memory of RAM104. In addition, a dynamic-image data origination means creates the dynamic-image data which displayed said static image in the resolution of 480x704 dots. That a static image is changed as dynamic-image data can makes to raise the resolution of image data and said data is sent to a printing means and to the printer. The printer can print more beautiful by more high resolution.

After performing the editing task of an image, selection of the image to print, and selection of a print sheet as mentioned above, printing is directed to application software (S15). Printing is performed in the printing paper or the common form for bookbinding. In case the printed image be bind to a book, application software will determine that it will become the desired direction, sequence, and a location, and will send data to the printer.

As a setup required for printing, selection of a printing paper, selection of the number of sheets of an image, selection of the frame given to an image, etc. are raised. Application software should print an image to which location and the direction according to the number of sheets of the selected form and an image, or the set point is built in beforehand, and by oneself, a user needs to set a value as a detail, or does not need to adjust it, and can determine it easily.

Image data is not restricted only to what is read from memory card 107 like the above-mentioned example. For example, as shown in Fig. 1, as an external instrument connected to a computer 112, a scanner 108 can be adopted, a static image can be read as static-image data with this scanner 108, and an album can also be created from this static-image data. After specifically capturing the image of a photograph [printed output (developed)] with a scanner 108, using as image data and editing on application, it will print by the printer. About the procedure after incorporating image data with a scanner, it is the same as that of said example. Moreover, it is also possible to insert CD etc. in the CD drive 111, to read the image saved at CD etc., and to create an album similarly from these images.

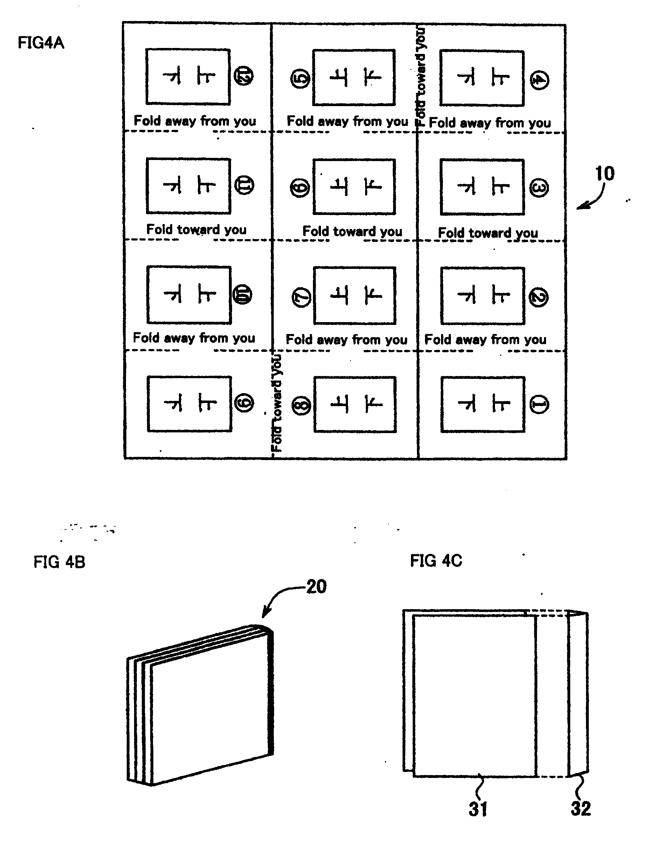

The example 1 of printing in above-mentioned is shown in Fig. 4. This example can print 12 sheets or less in the printing paper 10 of A4 size. However, it is not restricted to this size. Although the location of an image is decided, and the sense of an image also becomes from the 1st sheet to the 4th sheet from the 9th sheet with the same direction to the 12th sheet as shown in drawing, the 8th sheet is printed by the reverse direction from the 5th sheet, as shown in drawing at this form.

Moreover, it will be printed in the sequence which also shows the sequence of printing in drawing. A user chooses this printing direction, and if the sequence of the image to print is specified, it is not necessary to carry out detailed setup, such as the printing position of an image, the application software which is a print-data creation means will create suitable setting data, and he will print data to delivery and a predetermined print sheet to the printer 110 which is a printing means.

After printing is completed, the continuous-line part which is the slitting line of the printing paper 10 of Fig. 4A is cut. Cutting of a dotted-line part is not performed. It becomes the shape of an album 20 by which the image was printed in order of the request by using as "Fold away from you" and "Fold toward you" the dotted-line part which is a bend line as shown in Fig. 4A (Fig. 4B). Moreover, the approach of using that into which the slitting went beforehand as an printing paper, bending similarly after printing, and making it into the shape of an album 20 is also possible.

The form 10 only for printings serves as a kit with the cover 31 and the back cover 32, and an album is completed as a bookbinding condition by sticking a cover 31 and back cover 32 grade after printing, cutting, and bending.

Moreover, it is also possible to print in the common form which is not a printing paper and which is marketed. In this case, a slitting line and a bend line will also be printed by the form by setting up the purport which is a common form at the time of printing. Since a line required at the time of image printing is also printed by [, such as number of sheets of print sheet size and the image to print,] specifying at this time, it becomes possible by bending by cutting along with these lines to make the same form as the case where an printing paper is used.

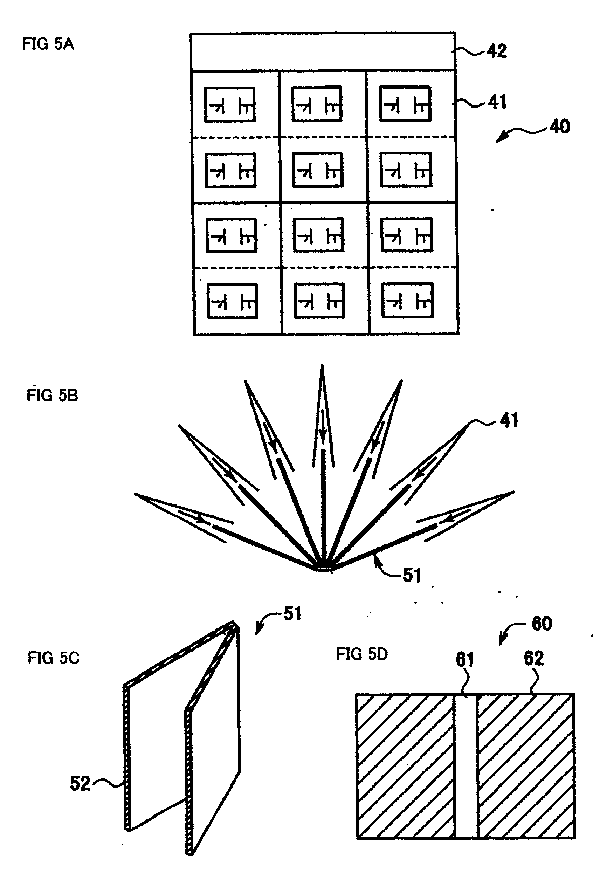

Next, an example 2 is shown in Fig. 5. Fig. 5A shows the printing paper 40 of this example. It is the slitting line cut after this continuous-line part's printing, and a dotted-line part is a bend line used as "Fold toward you". In this form 40, all images are printed in this direction. If a user performs selection of a printing paper and a printing image, application software does not need to determine all of the sense of an image, a direction, magnitude, a location, etc., and a user does not need to perform a delicate setup. The process until it results in printing is the same as an example 1. In the case of the example 2, one page 41 serves as a square. If A4 size is divided into 12 squares, since a margin part is made, this part will serve as the member 42 which forms a back cover.

Since the printing paper is cut separately every 2 pages in the case of an example 2, it is necessary to make the each cut form rival. Signs that the form 41 with which the image was printed and cut by pasteboard 51 at Fig. 5B is stuck are shown. For this reason, the pasteboard 51 for booklet creation beforehand filed as shown in Fig. 5B is enclosed as a kit. The form 41 after printing cut every 2 pages is used as "Fold toward you", and is stuck on pasteboard 51. If a releasing paper is stripped, pasteboard 51 serves as adhesive tape and can stick a form easily. If it is beforehand colored parts 52 other than the form attachment field of pasteboard 51 like Fig. 5C, an album implementer can also choose pasteboard according to liking.

A cover may be formed by the thick exception material 60 like Fig. 5D. The part 61 which hits a back cover serves as adhesive tape, before using it, a releasing paper is stripped and the printed bent form is pasted up. Thus, if the thing 60 with which the cover 62 and the back cover 61 were united is made into another material and it considers as the kit, the cover and back cover which have a high-class feeling with thick can be attached, and a quick and cheaply gorgeous album can be created.

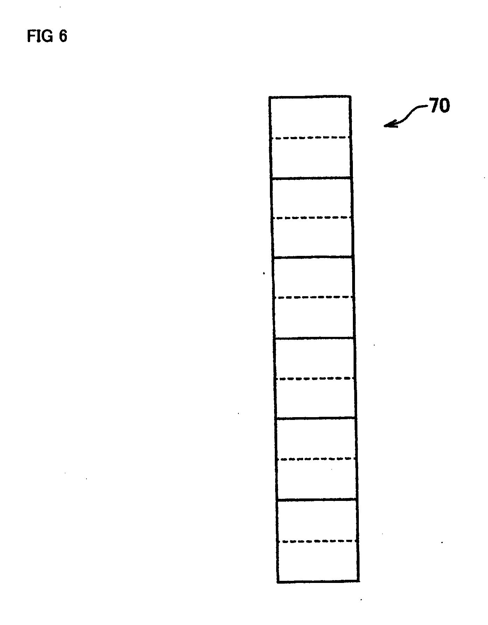

An example 3 is shown in Fig. 6. In the case of Fig. 6, it is the longwise exclusive printing paper 70. The image will be printed in an order from one edge. In this case, a dotted-line part is "Fold away from you", and a continuous-line part is "Fold toward you". In the case of drawing, the image of 12 sheets can be printed. However, an image printing field is not restricted to 12 sheets. The procedure until it prints is the same as that of an example 1. When printing, it becomes possible by choosing the type of a form with application software to print in the form of a configuration as shown in drawing.

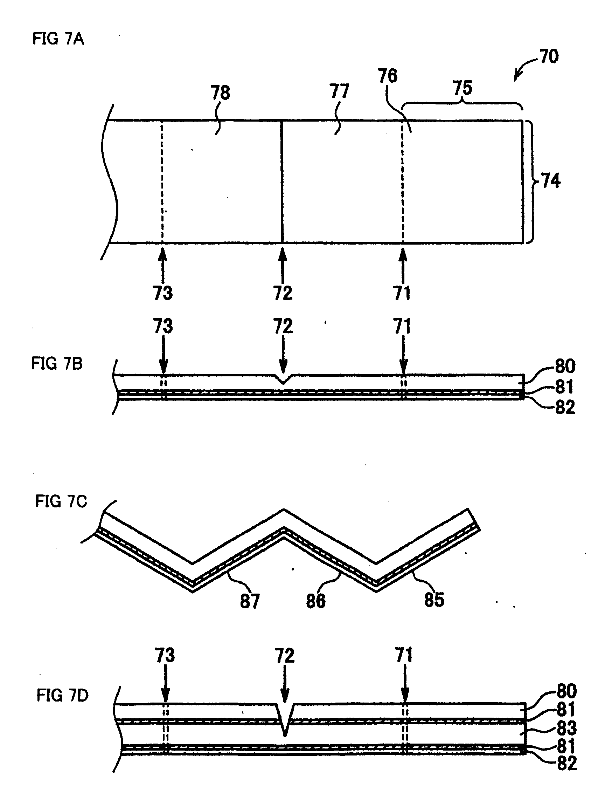

The detail of the print sheet 70 of an example 3 is explained. Like Fig. 7, it pushes on a print sheet 70 with perforations 71 and 73, and the bend line 72 by half cut is put into it by turns. The fields which pushed with the perforation and were divided by the bend line by half cut are the printing fields 76, 77, and 78 which print an image etc. This print sheet 70 has two or more printing fields 76, 77, and 78, and can print an image, an alphabetic character, etc. to each printing field. When each printing fields 76, 77, and 78 bind a book, they become 1 page. A bend line 72 is the hollow by the projection which was pushed and was created by half cut Perforations 71 and 73 are used as "Fold away from you", and use a bend line 72 as "Fold toward you". Thus, it becomes easy to bend by carrying out a bend line 72 to perforations 71 and 73 by turns. When the fields 76, 77, and 78 divided with perforations 71 and 73 and a bend line 72 are made into the form near a square (74 and 75 are made into the same die length), or a square, a high-class feeling comes out and it is much more good.

Moreover, when a micro perforation is used as "Fold toward you", you may make it a micro perforation part go out after printing by pushing and attaching the perforation by the fine micro sewing machine by the substitute of the bend line by half cut. By carrying out like this, when there is comparatively much pagination, it can finish with sufficient appearance.

The sectional view of a print sheet 70 is shown in Fig. 7B. When the glossy paper for photographs was used and it prints as printing paper 80, it can finish finely. Moreover, if a thing with a comparatively thicker thickness of 250 microns or more is used, a high-class feeling may come out. Adhesives 81 and a releasing paper 82 are attached to the rear face of the printing paper 80. A cover etc. can be made to rival by removing a releasing paper 82. If the thing of weak viscosity is used for adhesives, the re-exfoliation of them will be easy to be attained. Perforations 71 and 73 are penetrated and put in to the thickness direction of a print sheet. Moreover, it pushes, and it is good [bend line 72 by half cut] even for the interstitial segment of the thickness direction of printing paper to put in so that the printing paper 80 may not be separated and it may be easy to bend.

A photograph and an alphabetic character are printed on the printing paper 80 of such a printing paper 70. Drawing which used as "Fold toward you" the part which pushed by using a perforation part as "Fold away from you", and put in the bend line by half cut is shown in Fig. 7C. By removing a releasing paper 82, the field of 85 is pasted up with a cover. The field of 86 and 87 is pasted up on each other.

Other images of a printing paper are shown in Fig. 7D. A core material 83 is attached in the flesh side of the printing paper 80 with adhesives 81, and adhesives 81 and a releasing paper 82 are attached to the flesh side of a core material 83. The thickness of a core material is chosen according to the purpose. If reinforcement is given, a thing thick as a core material will be chosen. Perforations 71 and 73 are made to penetrate to the thickness direction of a printing paper. Moreover, it pushes, and it is good [he bend line 72 by half cut] to put in to the interstitial segment of the thickness direction of a core material 83, or the interstitial segment of the thickness direction of a printing paper so that a printing paper may not be separated and it may be easy to bend.

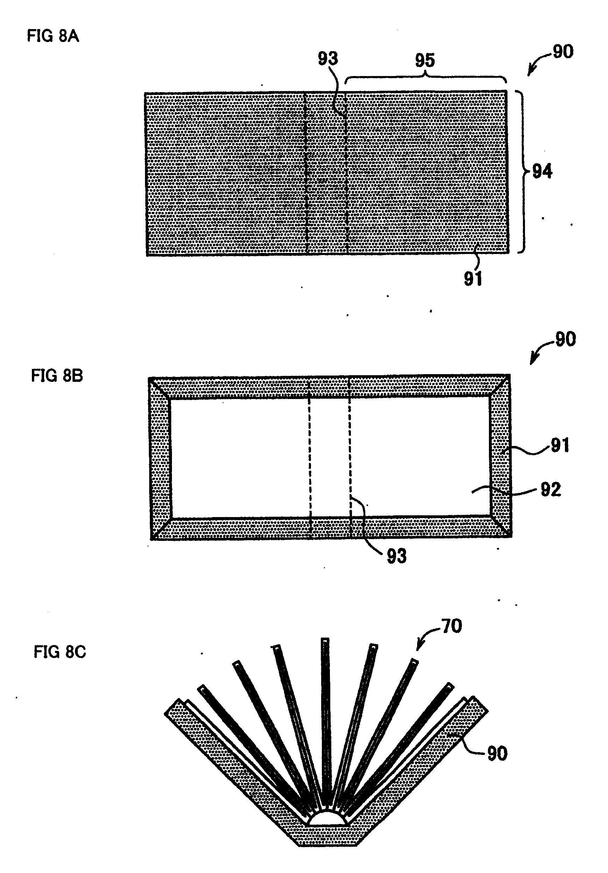

The front face of the cover 90 attached in Fig. 8A at a printing paper 70 is shown. The image which covered the thick paper 92 with cloth 91 is carried out. Appearance will become good if it is made for the die length of 94 and 95 to become equal. The cover 90 covered with cloth 91 can be printed by a printer.

The rear face of this cover 90 is shown in Fig. 8B. The bend line 93 at the time of binding a book is attached beforehand. Although the cover is flat before printing by a printer etc., a title etc. is bent along with a bend line 93 after printing or coloring. The form 70 which printed and bent the image etc. into the part of the thick paper 92 is stuck. Adhesives 81 perform attachment by exfoliating the releasing paper 82 of the flesh side of a printing paper 70. Drawing stuck and bookbinding is shown in (c). If it is made for the die length of the sides 94 and 95 of a cover 90 to become somewhat larger than the die length of the sides 74 and 75 of a printing paper 70, it is good-looking and a high-class feeling can be taken out.

Moreover, a cover may be covered with the cloth colored beforehand. In this case, if the cover of cloth is prepared and a user enables it to choose, a book can be bound according to liking. In addition, a cover does not need to be covered with cloth and may be paper.

A printing paper is not restricted to the above-mentioned image, such as a long picture-like image. What is necessary is just the image which can bind a book by bending after printing. Therefore, it has a bend line on the boundary of each printing field. This bend line may only be bent by printing, may show a part, and can finish bending now easily and finely by the perforation, a micro perforation, etc. A printing paper can print an image beautifully, if the glossy paper for photographs is used.

The album 120 which can attach CD to Fig. 7 is shown. If an album 120 is created in the size of the magnitude containing CD, CD can be inserted by attaching the case 121 which inserts CD in the inside of the front cover etc. In this case, the image which became the origin of this album creation made of paper is saved at archive media, such as CD-R, and this CD-R can be made the album made of paper, and a set, and can also be distributed. What was received becomes possible [appreciating or printing an image with a personal computer] if needed while enjoying an album.

According to the image processing system of this invention, an individual user can create the album by which printing bookbinding was carried out easily in the inside of a short time, without requesting a vendor. Moreover, it is considered not only an individual user but that a vendor installs in locations, such as a Photoshop, a convenience store, a wedding hall, and leisure facilities, and uses. Since the image processing system of this invention can be used as the album which bookbinding electronic image data to the inside of a short time, its utility value is high.

### [#2 Invention]

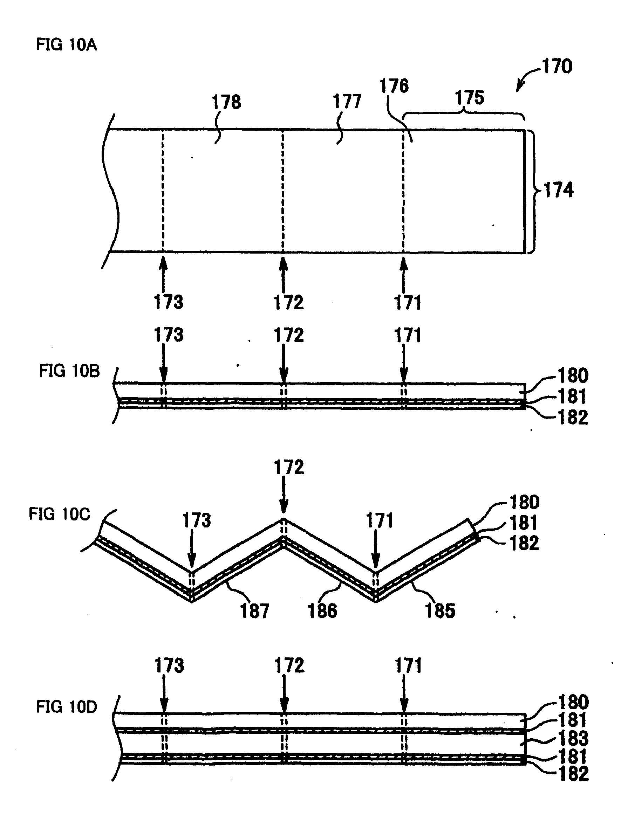

The detail of a printing paper is explained in Fig. 10. It is put into perforations 171, 172, and 173 by the printing paper 170 as the bending datum-line section like Fig. 10 A. The fields divided by the perforation are the printing fields 176,177, and 178 which print an image etc. This printing paper 170 has two or more printing fields 176, 177, and 178, and can print an image, an alphabetic character, etc. to each printing field. When each printing fields 176, 177, and 178 bind a book, they become 1 page. The printing paper 170 has even printing fields. Perforations 171 and 173 are used as "Fold away from you"(accordion-fold), and use a perforation 172 as "Fold toward you". "Fold toward you" and "Fold away from you" are repeated similarly hereafter. When the fields 176, 177, and 178 divided by perforations 171, 172, and 173 are made into the form near a square (174 and 175 are made into the same die length), or a square, a high-class feeling comes out and it is much more good.

When a micro perforation is used as "Fold toward you" line, you may make a micro perforation part to go out after printing by attaching the perforation by the fine micro sewing machine. By carrying out like this, when there is comparatively much pagination, it can finish with sufficient appearance.

The sectional view of a printing paper 170 is shown in Fig. 10B. When the glossy paper for photographs was used and it prints as printing paper 180 which has a printing field, it can finish finely. Moreover, if a thing with a comparatively thicker thickness of 180 micrometers or more is used, a high-class feeling may come out. The adhesive layer 181 and releasing paper 182 which are formed by the binder are attached to the rear face of the printing paper 180. A cover etc. can be made to rival by removing a releasing paper 82. If the thing of weak viscosity is used for a binder, the re-exfoliation of it will be easy to be attained. If a tack uses a binder (12Ns / 25mm or less) when especially a basis weight uses the printing paper 80 with a thickness of 180 micrometers or more by two or more 100 gr/m², when the lamination location will have shifted in the case of lamination, it be exfoliates and can paste up once again. Perforations 171, 172, and 173 are penetrated and put in to the thickness direction of a printing paper. In the part in which others are not illustrated, it is similarly put into the perforation.

A photograph and an alphabetic character are printed on the printing paper 180 of such a printing paper 170. Drawing which used a perforation 171 and 173 parts as "Fold away from you", and used as "Fold toward you" line which put in the bend line by the perforation 172 is shown in Fig. 10C. When printing fields are even printing paper, a field 185 is pasted up with a cover by removing a releasing paper 182. A field 186 and a field 187 are pasted up mutually. Or it prints to the printing paper with which the perforation is not contained in the boundary of each printing field beforehand, and you may make it put in a perforation after that.

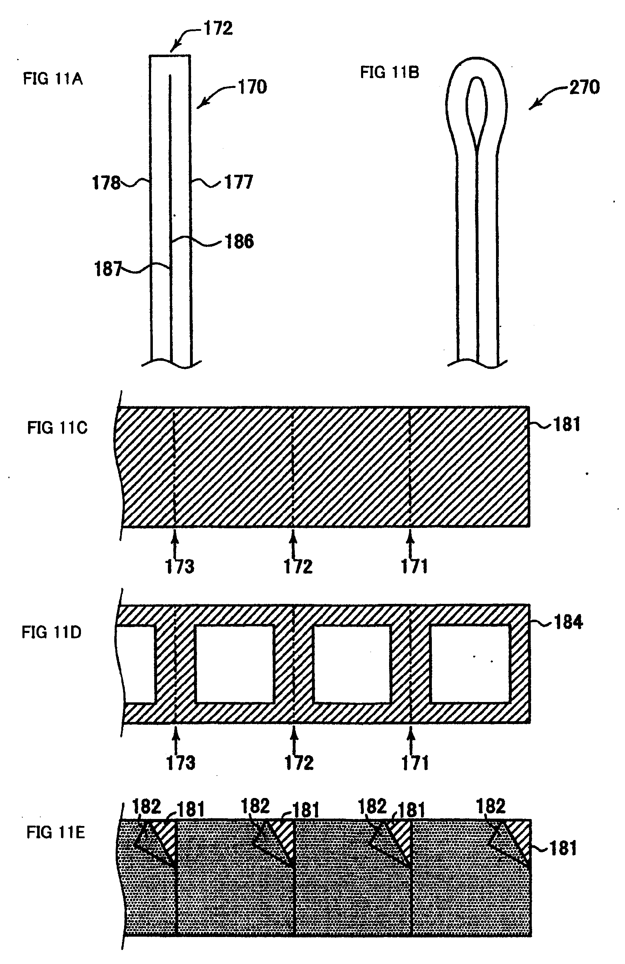

In the printing paper 170 into which the perforation was put here, the case where the case where it bends by the perforation 172 is bent in the location which does not have a perforation in Fig. 11A in the printing paper 170 into which a perforation is not put is shown in Fig. 11 B. If it sticks with the adhesives of weak viscosity when it bends without putting in a perforation, as shown in Fig. 11 B, bent near will exfoliate and will produce un-arranging. However, like this example, a perforation is put in, and even if it uses the method which bends that, then the adhesives of weak viscosity, it does not separate. And according to the adhesives of weak viscosity, when lamination goes wrong, exfoliating easily by hand is also possible.

In this example, using the printing paper which is 180 micrometers or more in two or more basis-weight 100 gr/m² and thickness, as shown in Fig. 11C, it was able to stick on the configuration as shown in (a) by forming in the whole rear face of a print sheet the adhesive layer which consists of a binder whose tacks are 12Ns / 25mm or less, and putting in a perforation between printing fields. When lamination went wrong, it became impossible to exfoliate easily, if the binder of the tack beyond this is used. Or an adhesive layer can also be formed only in the periphery on each rear face of a printing field as shown in Fig. 11 d. In this case, a binder with a larger tack than the above-mentioned tack can also be used. Moreover, as shown in Fig. 11E, in the rear face of the boundary of each printing field, a releasing paper can remove one sheet of releasing paper at a time in order by carving. If the releasing paper on the back which will be stuck if the releasing paper on each rear face of a field is cut respectively is removed, lamination and the releasing paper on the back continuously stuck on a degree are removed and rear faces are stuck similarly, soiling failure and the hand of lamination may stop being able to happen easily.

Other image of a printing paper is shown in Fig. 10D. A core material 183 is attached in the flesh side of the printing paper 180 by the adhesive layer 181, and an adhesive layer 181 and a releasing paper 182 are attached to the flesh side of a core material 183. The thickness of a core material is chosen according to the purpose. If reinforcement is given, a thing thick as a core material will be chosen.

Perforations 171, 172, and 173 are made to penetrate to the thickness direction of a print sheet. In the part which is not illustrated, it is similarly put into the perforation. Moreover, after printing in the printing paper in which the perforation is not contained beforehand, you may make it put in a perforation.

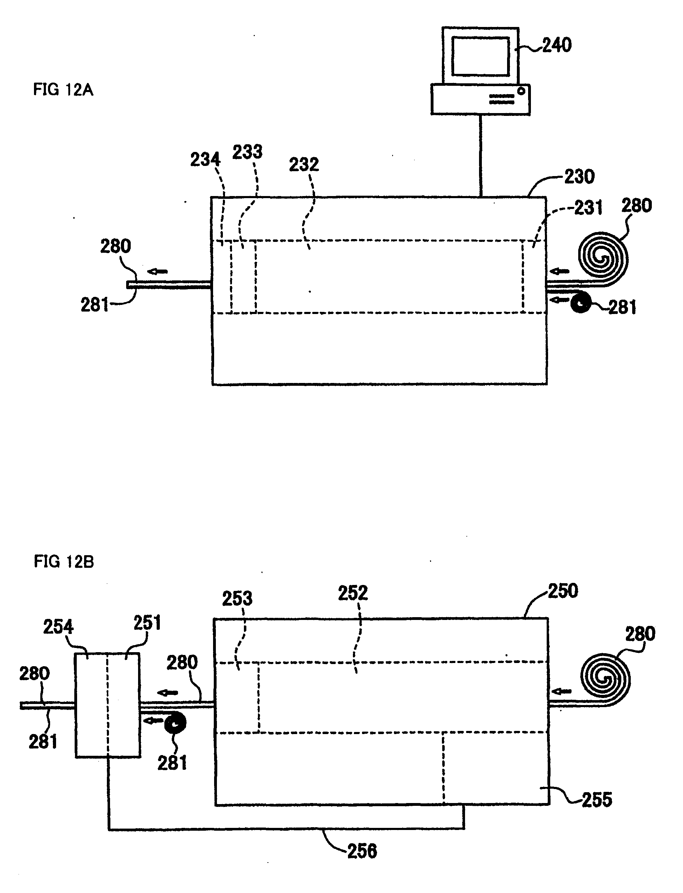

By the way, an adhesive layer is not beforehand formed in a printing paper rear face, but it can form at the time of printing. The example of the printer which has the function to adhere an adhesive layer to Fig. 12A at the rear face of a printing paper is shown. A printer 230 equips the interior with the adhesive layer formation section 231, the printing section 232, the bending datum-line section formation section 233, and the cutting section 234. Outside, the computer 240 as a print-data output means is connected.

The printer 230 which received print data from the computer 240 takes in the long printing paper 280 and the adhesion ingredient 281 which were rolled in the shape of a roll, makes one the long printing paper 280 and the adhesion ingredient 281 in the adhesive layer formation section 231, and forms an adhesive layer. And according to print data, image printing is performed to the printing field of the long printing paper 280 in the printing section 232. The printed long printing paper 280 is bent continuously, is sent to the datum-line section formation section 233, and can put in a perforation here. Or it may push and you may be a micro perforation and a bend line by half cut. Then, it is sent to the cutting section 234, is cut by desired pagination (the printed number of printing fields), and is discharged from a printer 230. The adhesive layer 281 is formed in the rear face, and the cut printing paper 280 is bent by the perforation, and let it be a booklet.

Other examples of the printer which has the function to adhere an adhesive layer to Fig. 12B at the rear face of a printing paper are shown. This printer 250 has the print-data output section 255. Furthermore, it has the printing section 252 and the bending datum-line section formation section 253. The adhesive layer formation section 251 and the cutting section 254 are connected with the print-data output section 255 by wiring 256. The adhesive layer formation section 251 and the cutting section 254 are controlled by the print-data output section 255.

The print-data output section 255 captures an electronic image, and outputs print data. A printer 250 incorporates the long print sheet 280 rolled in the shape of a roll, and prints it to the long printing paper 280 in the printing section 252 according to print data. The printed long printing paper 280 is sent to the bending datum-line section 253, for example, can put in a perforation. The long printing paper 280 discharged from the printer 250 is continuously sent to the adhesive layer formation section 251, and is united with the adhesion ingredient 181. An adhesive layer is formed in the rear face of the long printing paper 280 of this. Next, in the cutting section 254, it is cut by desired pagination.

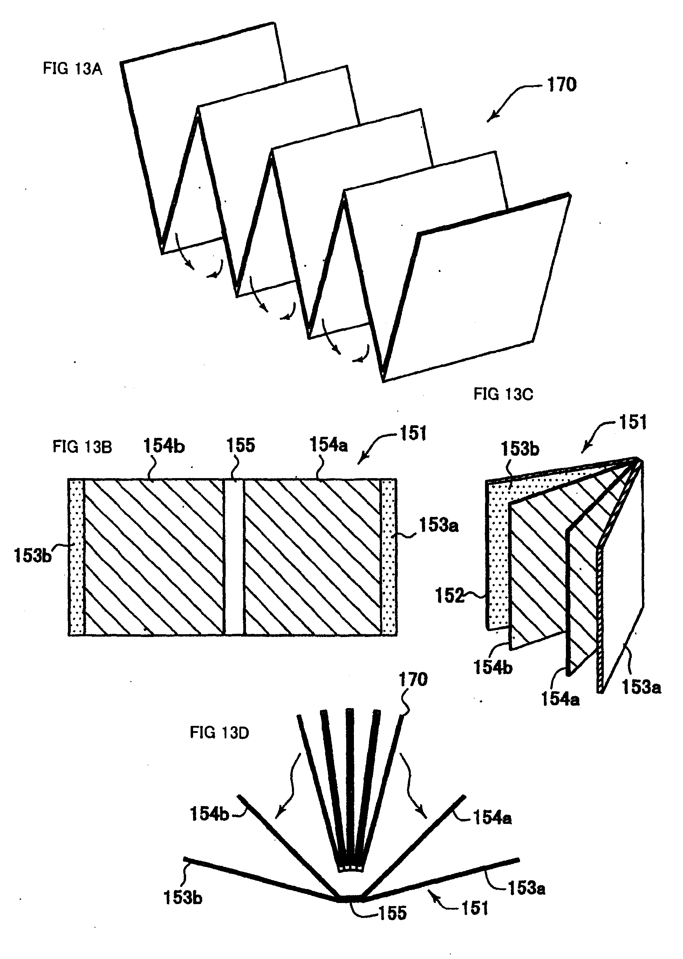

Fig. 13A shows a printing paper 170. After printing an image etc. as the image printing section to a printing field as mentioned above, it bends in a perforation. All images are printed in this direction by this form 170. If a user performs selection of a printing paper and a printing image, application software does not need to determine all of the sense of an image, a direction, magnitude, a location, etc., and a user does not need to perform a delicate setup. A process until it results in printing is as having mentioned above. In addition, it bends similarly about a printing paper 280.

The thick cover 151 for booklet creation is shown in Fig. 13B. The cover 151 for booklet creation consists of cover 153a, back cover 153b, a back cover 155, and fly leaves 154a and 154b. Inside cover 153a and back cover 153b, fly leaves 154a and 154b are attached. The rear-face side of the back cover 155 serves as adhesive tape, before using it, strips a releasing paper and pastes up the printed bent form. Thus, if the cover 151 for booklet creation with which cover 153a, back cover 153b, fly leaves 154a and 154b, and the back cover 155 were united is made into another material and it considers as the kit, the cover and back cover which have a high-class feeling with thick can be attached, and a quick and cheaply gorgeous album can be created. If it is beforehand colored the border 152 of the cover 151 for booklet creation like Fig. 13C, an album implementer can also choose pasteboard according to liking.

An image is printed by Fig. 13D and signs that the printing paper 170 bent in the perforation is stuck are shown. By the adhesive layer, a rear face is stuck on lamination and the cover 151 for booklet creation every 2 pages. The first page of a print sheet 170 is stuck on fly leaf 154a inside the cover 151 for booklet creation, and the last page of a printing paper 170 is stuck on fly leaf 154b. Moreover, adhesives are taking lessons also from the back cover 155, a printing paper 170 can be stuck on the cover 151 for booklet creation, and a booklet is completed. The adhesion of this adhesive layer is weak viscosity, when an attachment location is mistaken, is removed again and can be stuck.

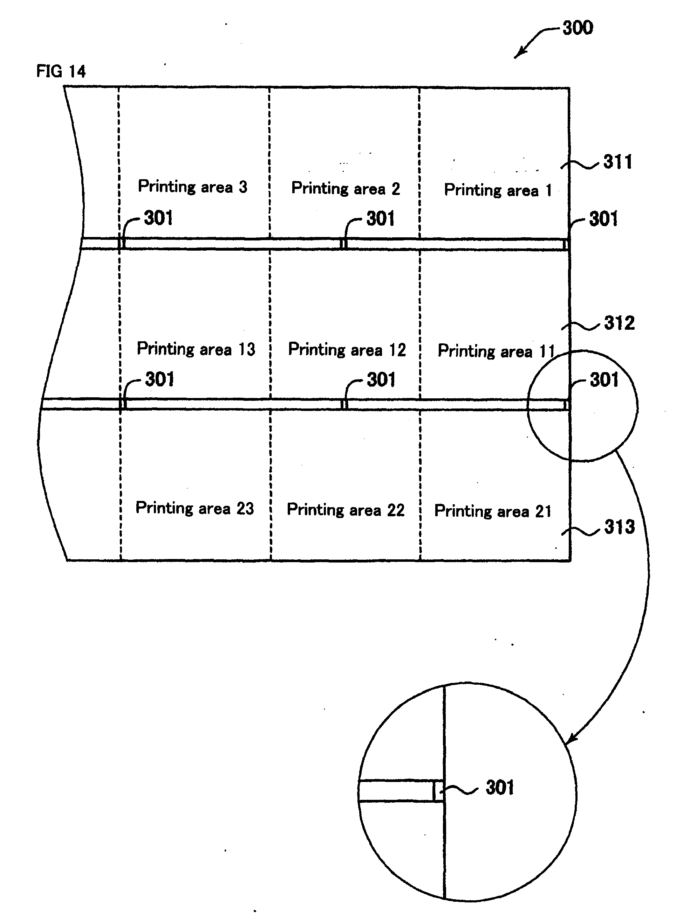

As shown in Fig. 14, the printing paper 300 which three printing paper 311,312,313 longitudinally connected is shown. It is separable by this printing paper 311,312,313 being joined by the joint 301 in each, and separating a joint 301 after printing. This joint 301 is formed especially in an edge, although it is formed in a position in order that each may not dissociate. When it prints in a printing machine by doing in this way, it can prevent printing going wrong without fixing the edge of each printing paper.

In the case of such a printing paper 300 of 3 reams, the printing paper of 3 ream is printed to coincidence with application software. That is, a field 1, a field 11, and a field 21 are printed to coincidence. Then, a field 2, a field 12, and a field 22 are printed to coincidence. Printing time amount can be shortened by doing in this way. Moreover, a field 1, a field 11, and a field 21 can print the same image, and can also print a different (what has three [ same] will be made in this case) image. When many same printing books need to be produced, such a print sheet especially is effective. As a printing paper to which the long picture-like printing paper was joined, it may not be restricted to the thing of 3 reams, but other numbers of long picture-like printing paper may be joined.

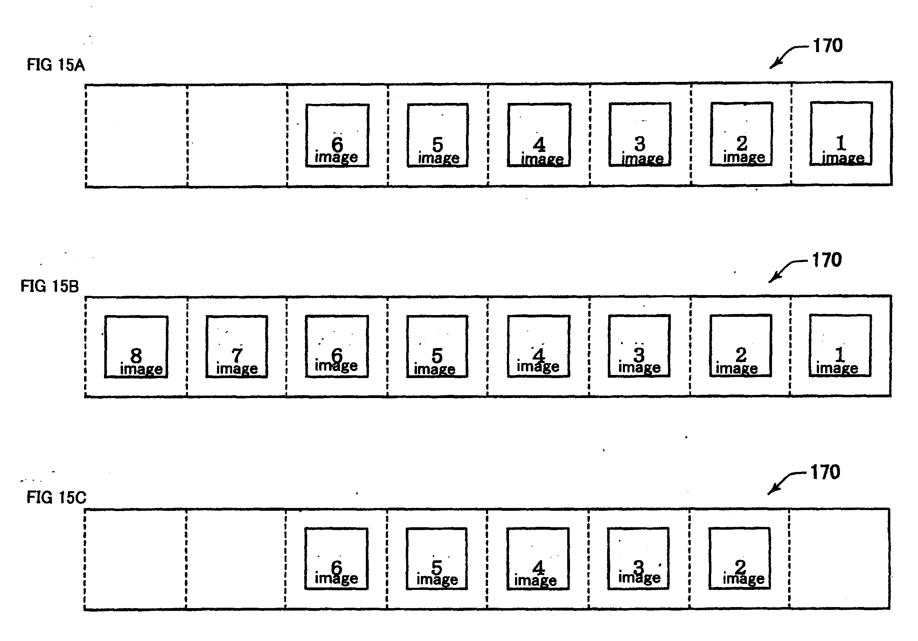

The presswork of the long picture-like printing paper 170 is shown in drawing 15. As shown in Fig. 15A, the image 1 which photography ended first thru/or 6 are printed. When there is the need of printing many same things, need number-of-copies printing of the photograph of a formula which already finished is carried out in the wedding hall. And as shown in Fig. 15B, additional printing of the photograph behind taken in the wedding reception can be again carried out as images 7 and 8.

Or as shown in Fig. 15C, it can leave the field which prints an image 1, other fields can be printed, and the image considered to the best out of the image photographed after that can also be printed as an image 1. That is, according to the application software of this invention, an image can be first printed to the field of arbitration and an image can also be printed to the field which was not printed after that. By having such a function, an album can be efficiently created by ending printing to the middle previously, when time allowances are scarce and printing the remaining image later.

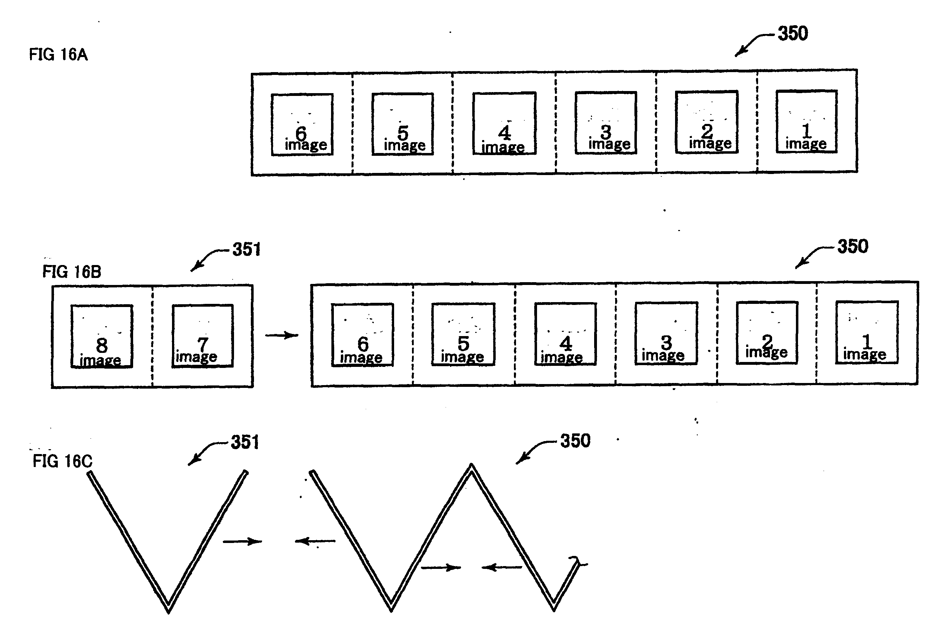

The presswork of a long picture-like printing paper is shown in Fig. 16. For example, the printing paper 350 can print six images, and the routing in the case of printing eight images and binding a book is shown. As shown in Fig. 16A, an image 1 thru/or 6 are printed to all the printing fields of the first long picture-like printing paper 350. Then, as shown in Fig. 16B, images 7 and 8 are printed to the second long picture-like printing paper 351 (in the case of drawing, it has two printing fields). And as shown in Fig. 16C, by sticking the rear face of the printing field 6 which printed the image 6, and the rear face of the printing field 7 which printed the image 7, the image which was not able to be printed to a first long picture-like printing paper can also be added, and it can consider as a booklet. Thus, even when there are many images printed by printing to the second printing paper and joining to the first printing paper, it can complete as a booklet of one volume.

The perforation may be above contained beforehand and you may make it put the perforation after printing into a printing paper. Moreover, it may not be restricted to a perforation but a micro perforation and the bend line by half cut may be [it may push and ] used. The number of printing fields of a printing paper is not restricted to the number shown in drawing. Furthermore, an adhesive layer is not restricted when formed beforehand, but it may be formed with adhesive tape etc. before printing or after printing.

### [#3 Invention]

A system which takes an image and print to printing paper is as same as the first invention, so it is not necessary to explain.
But animation image data making means does not have to be always provided. Therefore, read image data is not limited to JPEG still image data.

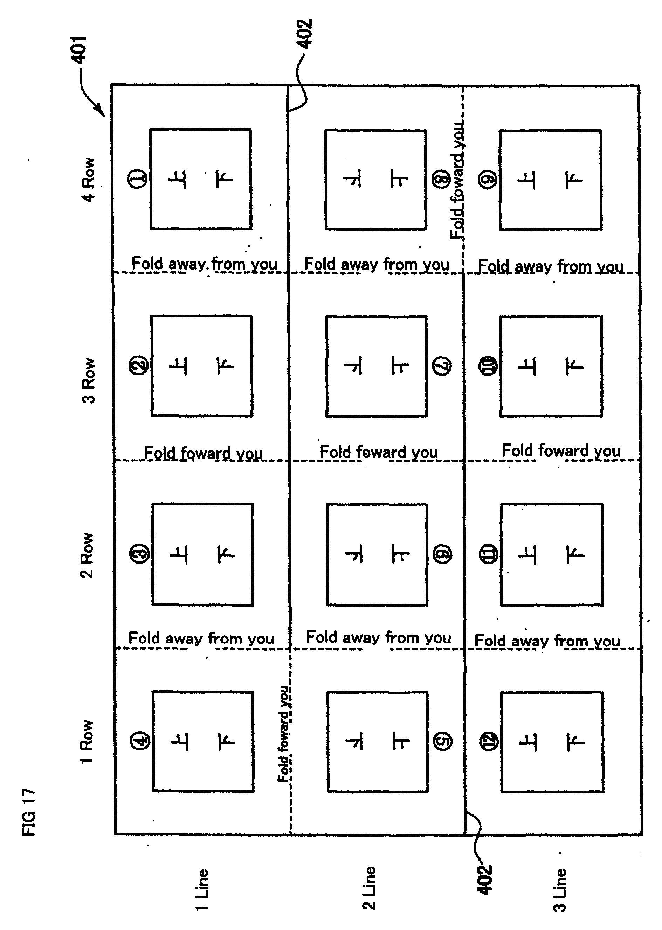

Execution example of the printing paper in order to draw up the album booklet in figure 17 is shown. The page area of identical size into 3 line 4 rows has lined up into this printing paper 401.

From above with first line and second line, from the left from the second line to four lines, from above with second line and third line, from the left the solid line to the third line displays cutting plane line 402 from the first line.

As shown in Fig. 17, when starting from the page territory in 1st line and fourth row, "fold away from you "line is formed between the first and 2nd page. "Fold toward you" line is formed between second and third page. Alternately, "Fold away from you" line and "fold toward you" line, it is formed.

Printing paper 401 can print an image less than 12 pieces and it is at A4 size. But it is not limited to this size. A position of an image is decided, and a direction of an image is also decided shown in Fig. 17. On this paper, each image from the first page to the fourth page and from the ninth page to the twelfth page is printed in the same direction. From the fifth page to the eighth page, it is printed to reverse. It is expected that the order of printing is printed by order to show in a figure. If a user chooses a print form and appoints order to print, it is not necessary to do detailed setting located in. Application software of print data making means does appropriate setting and prints data to forwarding printing paper to printer 110 of print means.

Cut off cutting Line 402 that was shown by a solid line of printing paper 401 of Fig. 17 after print was finished. Do not do cutting of a dotted line part. It can be got the album booklet that an image was printed in order of a wish by grinding a dotted line part in "Fold away from you" and "Fold toward you".

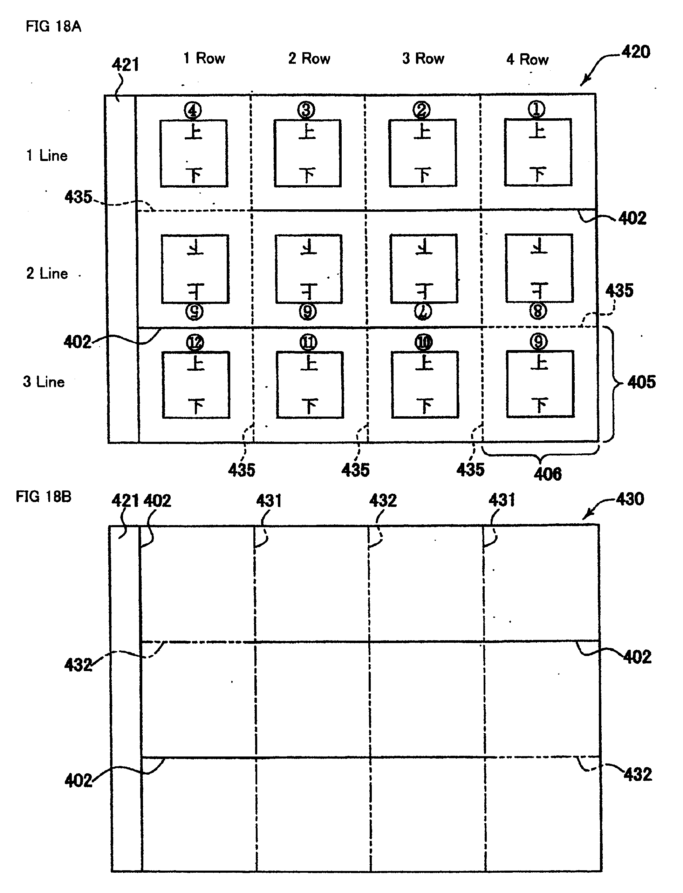

It is shown other enforcement example for Fig. 18A wherein print area of 12 pages equals printing paper 420 in four rows of three lines. Furthermore, each page domain is formed with a square. On this account, a leftover part 421 is formed. Then a high-quality feeling may leave each page area in form to be a square (side 405 of a figure and side 406 is the same length) or almost square. Cutting Line 402 and "Fold toward you" and "Fold away from you" lines 435 is formed same as the above-mentioned enforcement example. A page area is similar to the said article, too.

Separate leftover part 421 after printing images in each print domain and separate each page domain by cutting Line 402. Affix it to assume printing paper 420 an album booklet. Leftover part 421 may use it as a title label.

The said article is similar, and, to printing paper 430 of Fig. 18B, cutting Line 402 is formed. "Fold toward you "line and "Fold away from you " line are formed equally, too, but the line is colored with a different color. For example, "Fold toward you " line is colored red 431, "Fold away from you" line with blue 432. In this way, it is easy to understand where in "Fold toward you " and where in "Fold away from you " after having cut it off with cutting Line 402 after print.

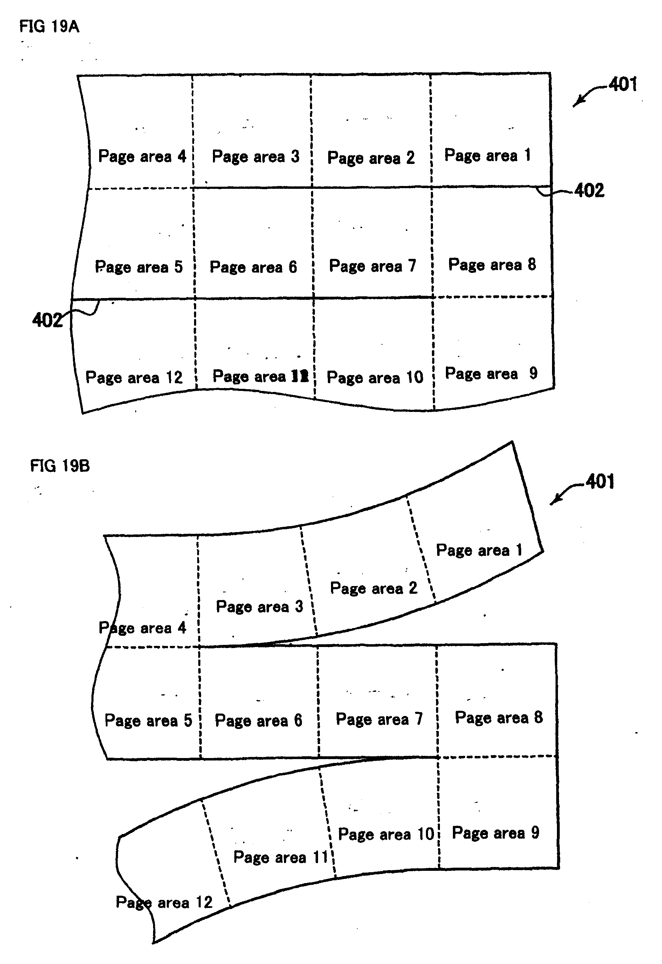

Fig. 19 explain cutting between page domains with cutting Line. In Fig. 19A which is printing paper 401, cutting Line 402 is formed. In Fig. 19B, after print with images to this printing paper, it cut off with cutting Line 402. In Fig. 19B, it is shown that formed cutting Line 402 is used to cut between the first line and the second line, and to cut between the second line and the third line.

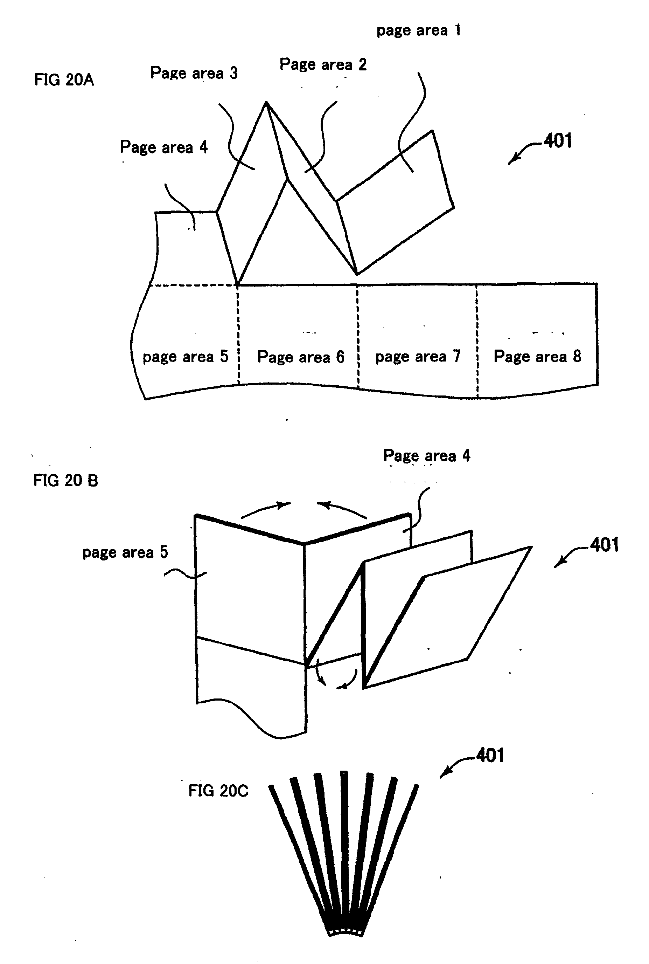

Fig. 20A use printing paper 401 and show a state using "Fold toward you" line and "Fold away from you" line, and to bend each page area of the first line of cutting off. In "Fold away from you" line of a border of page area 1 and page area 2, it is done in "Fold away from you". It is done in "Fold toward you" line of page area 2 and page area 3 in "Fold toward you ". It is done in "Fold away from you" line of page area 3 and page area 4 next in "Fold toward you". And it is done in "Fold toward you" line of a border of page area 4 and page area 5 in "Fold toward you" to show it in Fig. 20B.

About a boundary line of a page area of the second line and third line, it is bended in the same procedure as follows. It is made adhesive together to the rear side of a page area after having bent all page areas. Fig. 20C shows the result. In other words printing paper 401 becomes a booklet state.

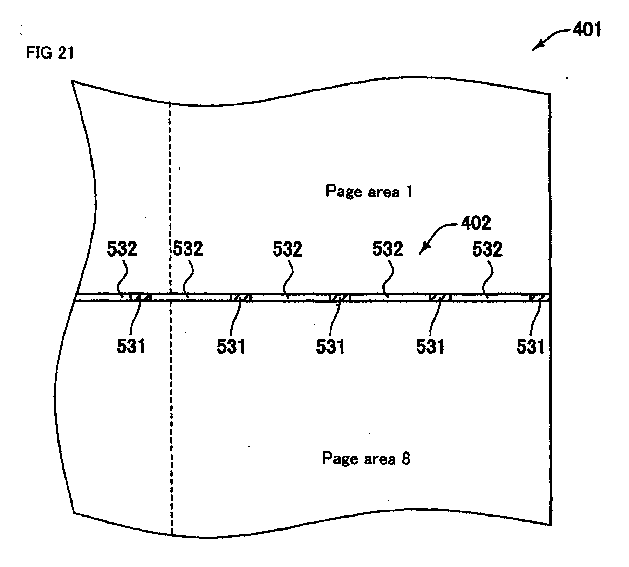

Using Fig. 21, It is explained cutting line 402 between each line which is formed in printing paper 401. Each line is connected by connection department 531 so that it is shown in a figure. A figure shows connection department 531 to connect page area 8 to page area 1. This connection department is made in cutting line 402. In cutting line 402, there are penetration ditch 532 besides connection department 531.

Therefore, It can be separated page area 1 and 8 easily if It is used a handle and divide connection department 531.

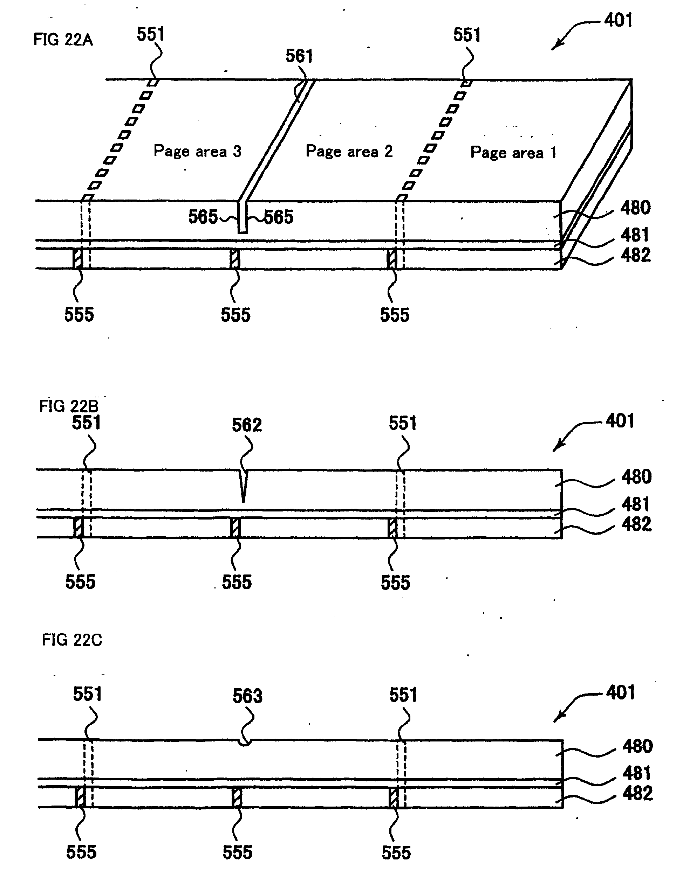

Using Fig. 22, explain "Fold toward you" line and "Fold away from you" line which are formed between page area in each row of printing paper 401. As for printing paper 401, it is it from printing paper layer 480 to have a page area toward and adhesion materials layer 481 and class of releasing papers 482.

It can be assumed that it is used coated paper for photographs for the printing paper layer with good print. In addition, there is a booklet with a high-quality feeling if it is used thicker printing paper (more than 180 micron). In the figure, a thickness direction is emphasized.

Perforation 551 is used as "Fold away from you" line and half cutting 561 is used as "Fold toward you" line in Fig 22A. Half or 2/3 cut off printing paper 480 in a depth direction to make half cutting 561. Therefore, paper is connected. Half cutting line 561 is ditch structure. Therefore, it is easy to hold occasion bending.

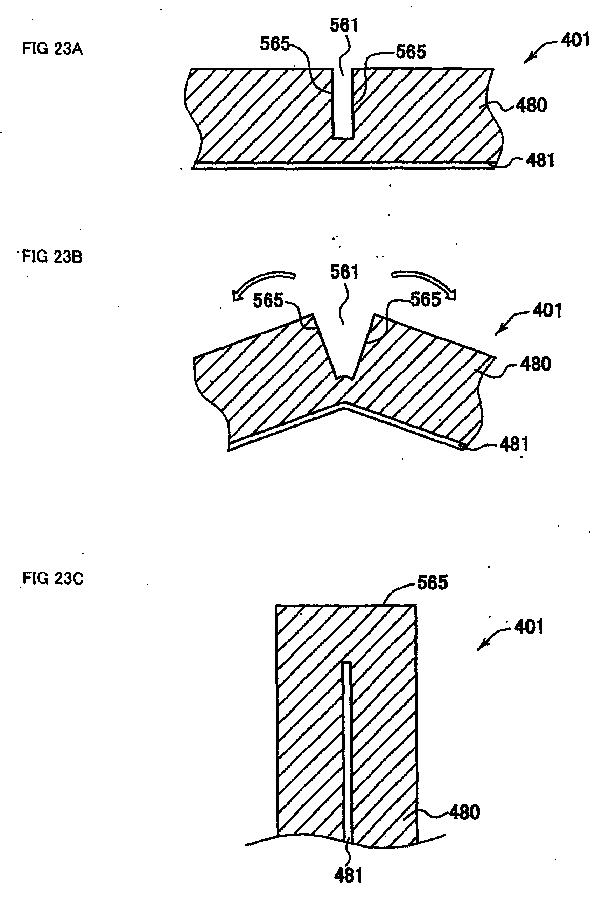

Fig. 23A is cross sections of ditch structure. Half cutting line 561 has ditch inside 565. Then ditch inside 565 becomes an approximately plane end face to show it in Fig. 22C. Then, with adhesion layer 481, affix each other's back side. By using such a ditch structure for a booklet, it is possible to have easy bending method and a clean end face.

It is accepted to make Cutting line 562 by V cut method in Fig 22A, or by press 563 in Fig. 22C. And also it is accepted that "Fold toward you" is by perforation or by half cutting. And it is also possible to use micro-perforation for "Fold toward you" line and using this, it is possible to cut this place and make good booklet that has many pages.

By picking off the releasing paper 482, it make possible to adhere the both of rear side, or to the booklet rear-cover. Releasing paper has the cutting line 555 where is near the perforation line 551, or near the cutting line 561,562,563. When it is bended the line which is "Fold toward you" line, or "Forward away from you line", it can be easily peeled off the releasing paper using this 555 line.

If weak viscosity for adhesive layer 481 is used for binder, re-exfoliation will be easy to be attained. If paper 480 uses a binder (12 Ns/25mm, or less) and the density of printing paper (100 gr/m², or more and width 180 micron, or more), it exfoliates and can paste up again easily.

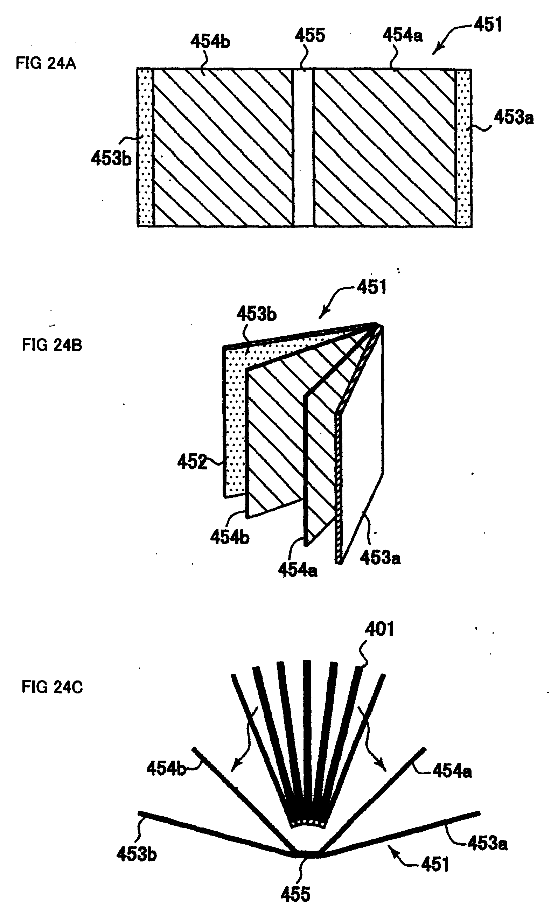

Fig. 24A show the thick type of booklet cover 451.

The booklet cover is constructed with front cover 453a, rear cover 453b, backbone 455, inner-cover 454a and 454b. It is attached inner-cover inside of front and rear cover. Rear side of backbone cover has tack. After pick off the release tape on tack, quasi-booklet is adhesive to this. Using this booklet kit with booklet cover 451 with which is 453a, 453b, 454a, 454b and 455, it is possible to make gorgeous album instantly and cheaply.

Fig. 24B show the example that customer can select the color what he want if the cover 451 is pre-color.

Fig. 24C show the process of booklet making which image is printed on the printing paper 401 and make "Fold toward you "and "Fold away from you" line and pick off release paper and make the rear side adhesive together and tack to booklet cover 451. Inner-cover 454a which is inner side of booklet cover 451 and rear side of the first page bind together. Inner-cover 454B which is inner side of booklet-cover 451 and rear side of the last page bind together. Then backbone portion will work together with assembled printing paper 401. The booklet assembly is complete. The weak viscosity of this adhesive makes easy to exfoliate and paste up again.

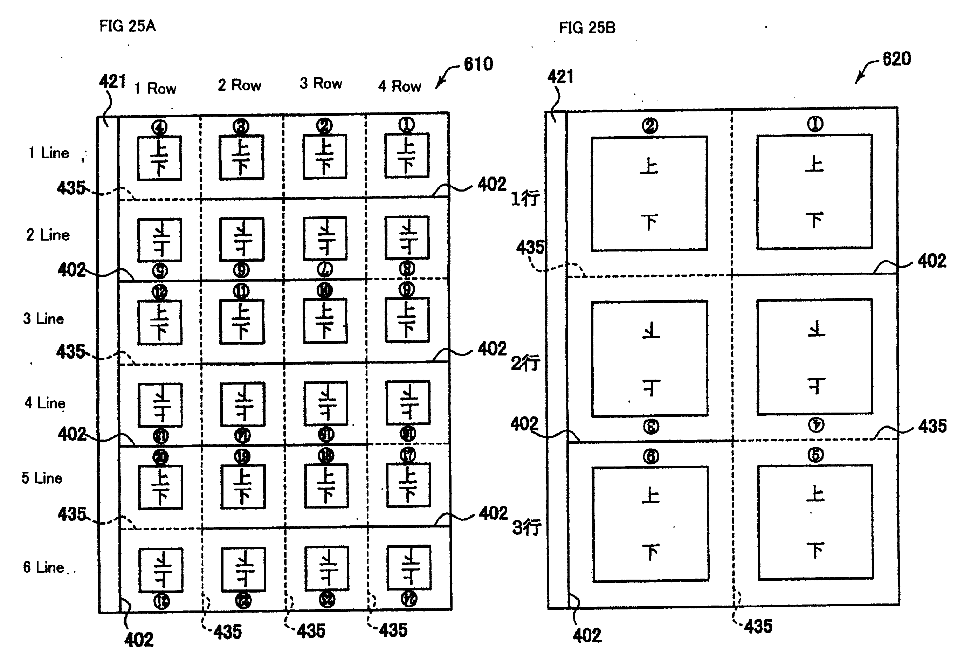

Fig. 25A show the example of using A3 size 610 printing paper. It has double side of A4 page area. This example shows the 24 page area. Cutting lines are shown by solid lines. "Fold toward you" and "Fold away from you" line 435 are also shown. To make the booklet ,printing the image on page area on right direction and cut off the remain area 421 and cut the lines by cutting lines 402s and bending by "Fold toward you" and "Fold away from you" lines and pick off the release paper and make adhesive together with rear side.

Figure 25B shows the 4^{th} page size which we want bigger album page size.

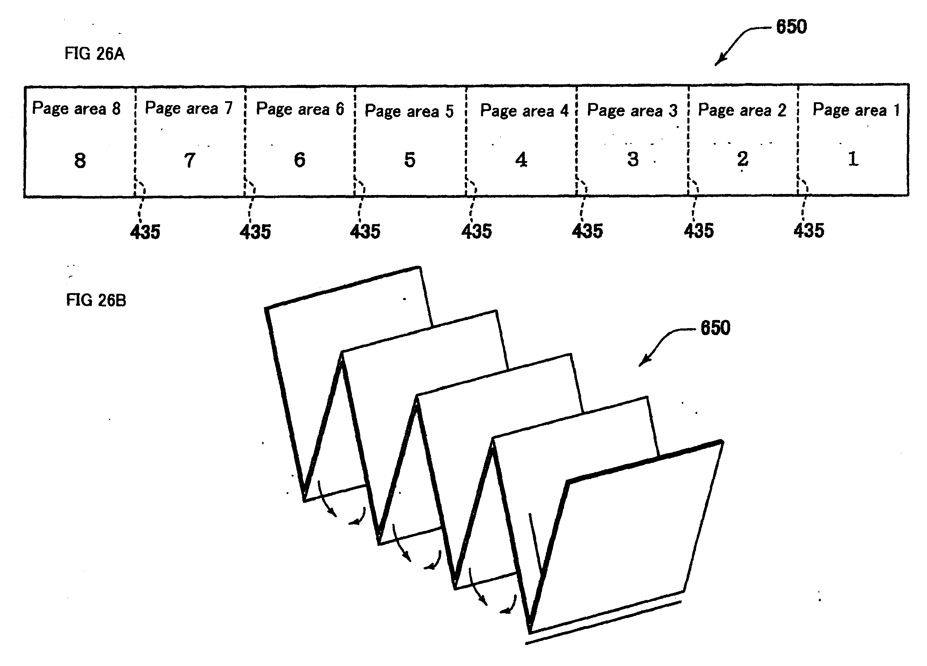

This invention is used to longitudinal printing paper type in Fig. 26A and Fig. 26B. Printing paper 650 which page area is lined up is formed by bending line 435 and rear side of page area has adhesive layer and bending line has perforation or cutting line.

After printing image and character through 1 page to 8, it is bended by using the bending line 435 which is "Fold toward you" or "Fold away from you " line and make adhesive using rear side as same as example. The booklet is completed as same as before sample.

Printing paper which is explained above is possible to use that is perforated before or is perforated after printing. Instead perforation, it is possible to use micro perforation or bending line by press. And page area is not limited said numbers. And it is possible to use that has adhesive layer or that is made adhesive layer after printing or made by adhesive tape.

Using this printing paper is make it possible to assemble the booklet easily and rapidly. After printing the images on paper and bend the page areas by using the bending lines and cutting lines. It is possible to enjoy making original booklet by excellent quality because of direct printing on own printing paper and making booklet using cutting lines and bending lines by themselves.

### [#4 Invention]

The system and the process steps up to the capturing of images and printing on the printing paper are same as those in the first invention, and will not be detailed herein. It is to be noted, that it is not always necessary for the system to possess the video image data generation unit. The image data to be read therein is, therefore, not limited to JPEG still image data.

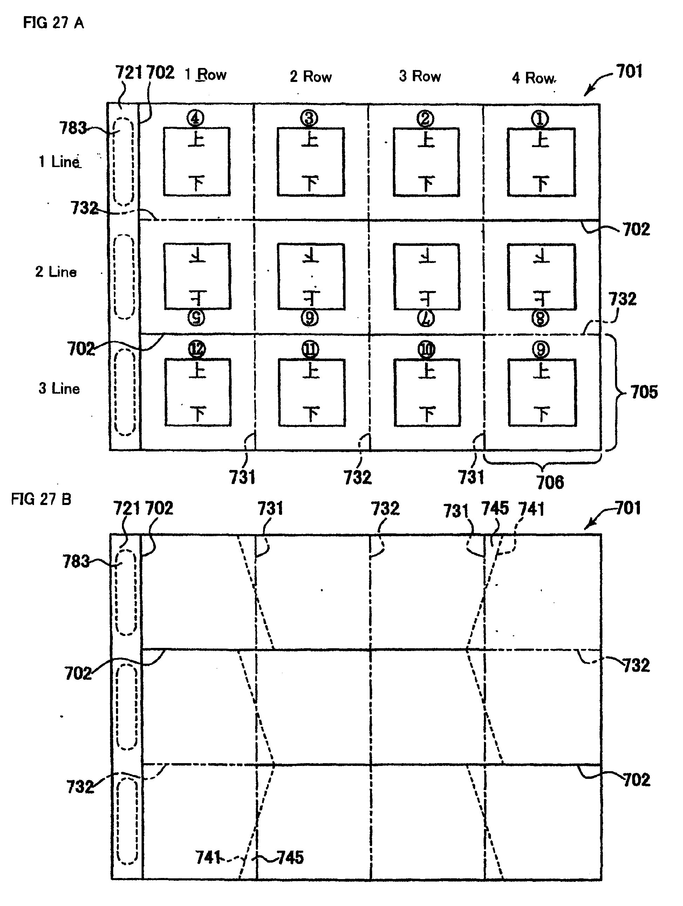

FIG. 27A and FIG. 27B show an example of the printing paper used for creating an album booklet. FIG. 27A shows the surface of printing paper 701. The printing paper has page regions of the same size arranged therein in three lines and four rows. Each solid line extending between the first line and the second line, from the second row from the left towards the fourth row, and the solid line extending between the second line and the third line, from the leftmost row towards the third row expresses a cutting line 702. Based on the numbering of the page regions as started from the page region on the first line and the fourth row as shown in the drawing, a "Fold away from you" line 731 is formed between the first and the second page regions, and a "Fold toward you" line 732 is formed between the second and the third page regions. The "Fold away from you" lines 731 and the "Fold toward you" lines 732 are alternately formed side by side hereinafter.
Printing paper 701 can allows therein printing of 12 or less A4-sized images, although not limited to this size. On the printing paper, positions of the images are determined as shown in FIG. 27A, wherein the orientation of the images are the same on the first through the fourth pages, and on the ninth through the twelfth pages, but upside down on the fifth through the eighth pages. If this mode of printing is selected and the order of printing images is specified by the user, there is no more need of any detailed settings including positions of where to print the images. Instead, an application software, as a means for creating print data, creates the appropriate set data, sends the data to printer 110 as a printing method, and performs printing on the printing paper.

Printing paper 12 has page regions each arranged therein by three lines and four rows in A4 size. Each page region has a square form. Making each page region to have a square form (equal in length of edge 705 and edges 706 in the drawing) or a near-square form is preferable in terms of producing a touch of high quality. Residual region 721 which does not serve as a page region is also formed. Residual region 721 is then formed in label region 783 in which a title of the booklet or the like can be printed. When the images and so forth are printed in the page regions, the titles and so forth will be printed on the labels.

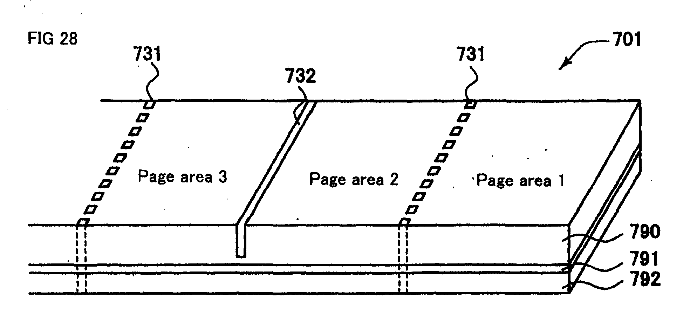

The next paragraphs will describe a sectional structure of printing paper 701, and the "Fold toward you" line and the "Fold away from you" line formed between every adjacent row, referring to FIG. 28. Printing paper 701 comprises a sheet 790 with page regions having a adhesive layer 791 on the back surface thereof, and a release (stick & peel) paper 792 placed thereon. Use of a glossy photo paper as sheet 790 can ensure a fine finish of printing. The use of a relatively thick product, as thick as 180 m for example, is preferable in terms of producing a touch of high quality. It is to be understood that the drawing emphasizes the direction of the thickness.

As shown in FIG. 28, "Fold away from you" line 731 is given as a perforation line. "Fold toward you" line 732 is given as a half-slit. The half-slit is formed as cutting sheet 790 to a depth of half or 2/3 of the depth-wise direction thereof, allowing the residual depth to remain connected. In other words, it has a bottomed trenched structure. This facilitates the folding.

It is also allowable to give the perforation line as the "Fold toward you" line, and to give the half-slit as the "Fold toward you" line. It is still also allowable to give the perforation line as a micro-perforation line, so as to ensure cutting at the micro-perforation line when the printed sheet is folded toward you at the micro-perforation line. This ensures a nice looking booklet having a relatively large number of pages.

The cover and the back surfaces can be bonded with each other, by peeling release paper (peel & stick) 792 off of the back surface. Release paper 792 has formed therein a release-assist formation line which facilitates the peeling of release paper 792 initiated from the release-assist formation line, after being folded at a portion of the folding line.

A weaker adhesive agent composing adhesive layer 791 is preferable in regards to enabling re-peeling. In a particular case where sheet 780 having a base weight of 100 g/m² or more and a thickness of 180 m or more is used, use of a adhesive having a tackiness of 12 N/25 mm or less allows peeling-off and re-adhesion, even if the position of bonding should shift during the bonding process.

Referring now back to FIG. 27B, the back surface of printing paper 701 will be explained. The back surface of printing paper 701 is covered with release (peel& stick) paper 792 (see FIG. 28). Release paper 792 has a release-assist formation line 741 formed therein. As shown in FIG. 27B, release-assist formation line 741 is diagonally formed as extending from " Fold away from you " line 731. Release-assist formation line 741, "Fold away from you" line 731 and the edges of the printing paper or cutting line 702, form the tab portion 745. Release-assist formation line 741 is a slit formed on release paper 702, and is not formed on sheet 790.

After printing, cutting line 702 of printing paper 701 which is expressed by the solid line shown in FIG. 27A and FIG. 27B is cut. The portion expressed by a dotted line is not cut. By folding the portions expressed by the dotted line in an away-from-you manner and in a toward-you manner, an album booklet having the images printed therein according to a predetermined order can be obtained. Cutting line 702 will not be explained, because it is the same as described in the third invention (see FIG. 21). Cutting at the cutting line is also performed similarly as the third invention (see FIG. 19). Folding at the "Fold toward you" line and the "Fold away from you" line, and bonding back-to-back yields a fold section (see FIG. 20).

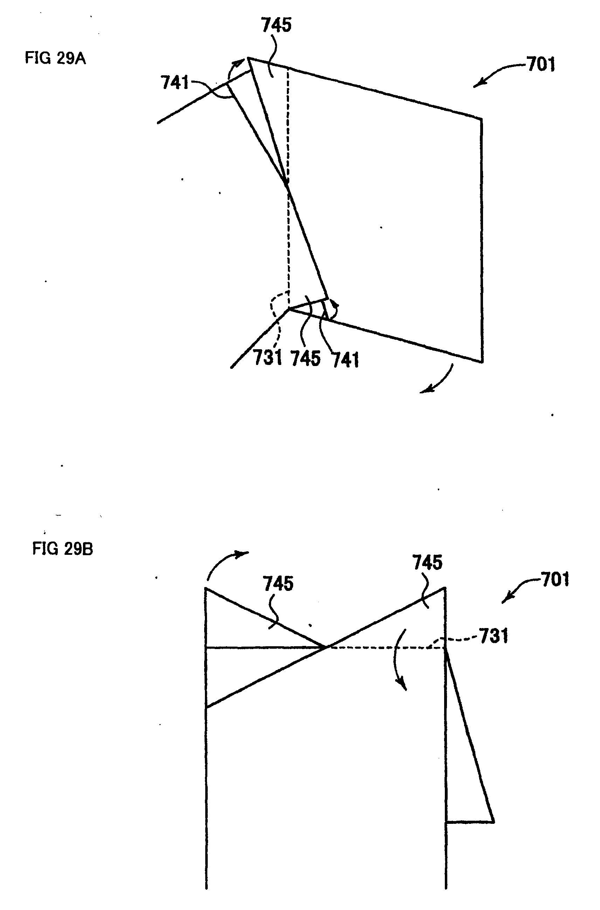

The process of peeling-off of the release (peel & stick) paper for bonding of the printing paper will be explained referring to FIG. 29A and FIG. 29B. FIG. 29A shows the back surface of printing paper 701. The back surface of printing paper 701 has formed therein release-assist formation line 741, which is positioned diagonally to "Fold away from you" line 731. Release-assist formation line 741 is configured as a slit formed on the release paper, wherein the slit does not reach sheet 790 on which printing is performed. By folding at folding line 731 between the page regions as shown in the drawing, tab portion 745 of the release paper is peeled off from release-assist formation line 741. Tab portion 745 can then be manipulated by fingers, and pulled in the direction indicated by the arrow shown in FIG. 29B, to thereby peel the release (peel & stick) paper off.

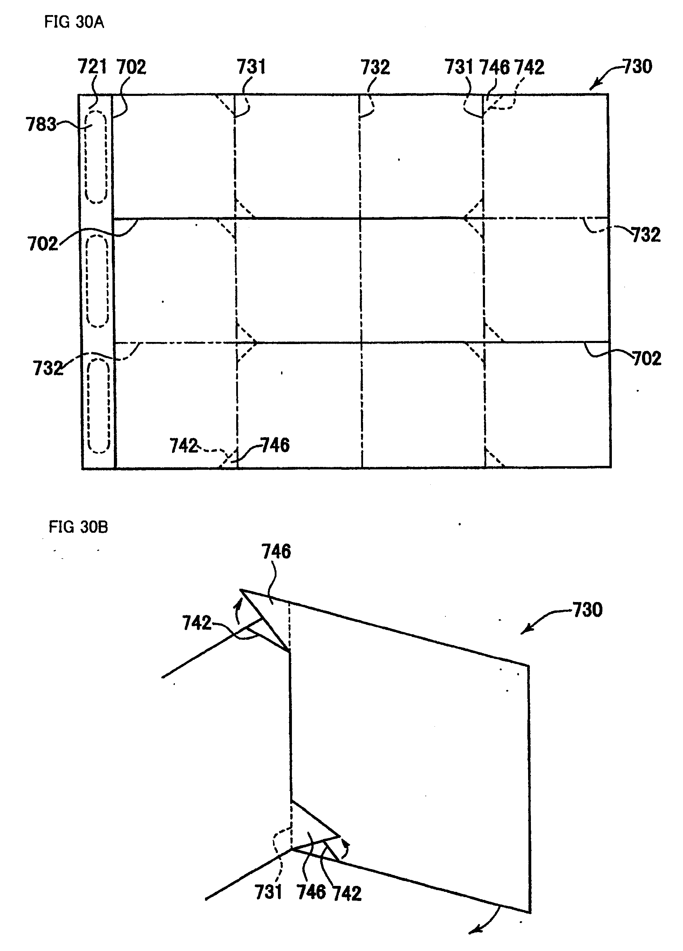

FIG. 30A and FIG. 30B show yet another example of the tab portion. FIG. 30A shows the back surface of printing paper 730. Tab portion 746 is formed in a geometric triangle by the release-assist formation line 742. By folding printing paper 730, at "Fold away from you" line 731 on the boundary of the page regions as shown in FIG. 30B, tab portion 746 is formed in a partial region of the release paper and lifts up from the adhesive layer. Picking up of tab portion 746 facilitates the peeling-off of the release (peel & stick) paper.

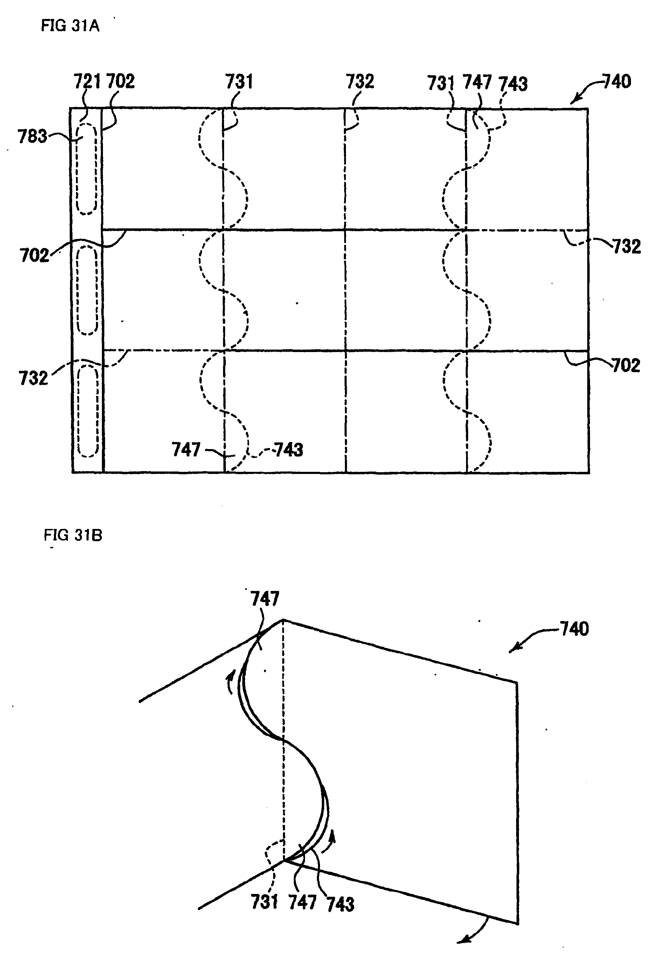

FIG. 31A and FIG. 31 B show still another example of the tab portion. FIG. 31A shows the back surface of printing paper 740. The release paper has a semicircular slit (release-assist formation line 743) with respect to the folding line, so as to form tab portion 747. The slit is not formed on the sheet on which printing is performed. FIG. 31 B shows a folded state of printing paper 740. By folding printing paper 740, tab portion 747 is formed and the release (peel & stick) paper is peeled off from the adhesive layer. Picking up of tab portion 746 facilitates an easy removal of the release (peel & stick) paper.

By forming the tab portion in the vicinity of the folding line as described in the above, the tab portion is peeled off when the printing paper is folded at the folding line, because of the smallness of the area and the weakness of the tackiness of the tab portion. This makes it possible to peel off the release (peel & stick) paper by picking the tab portion thereof. The shape of the tab portion is not limited to that described in the example above. Provided that the tab can be peeled off from the adhesive layer upon being folded, any geometric shape will suffice. For this reason, a tab portion with a small area is preferred, whereby a larger area would result in an adhesiveness tolerant enough to withstand the folding, and would fail in peeling off of the tab portion even if the printing paper is folded. It is also allowable, in place of forming the tab portion, to enclose an adhesive tape having a certain level of strength as a kit component, and to attach the adhesive tape to the release (peel & stick) paper in the vicinity of the folding line, and to pull the adhesive tape thereby peeling off the release (peel & stick) paper.

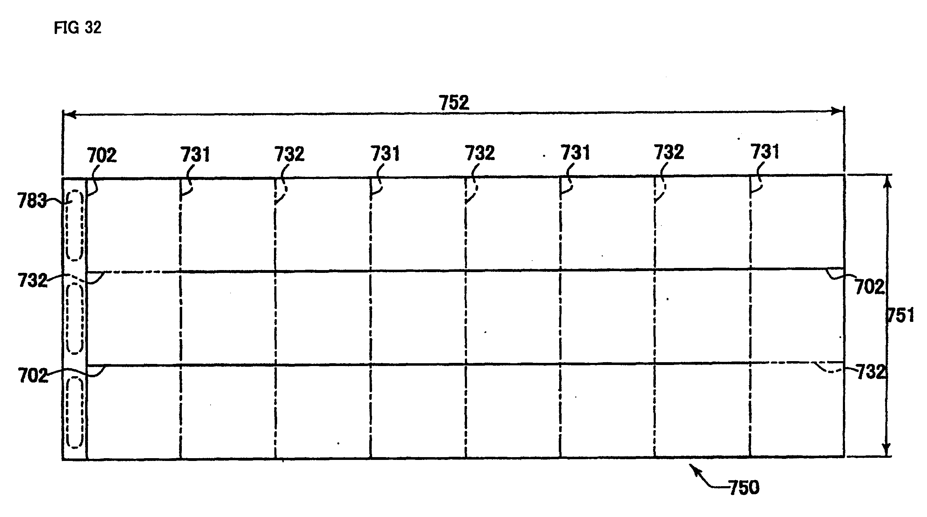

FIG. 32 shows an example of printing paper having a size of a longitudinal link of A4 sized sheets of paper. The paper has a width 751 of 210 mm, which is equal to the width of the A4-size paper. The length 752 is 594 mm, which is twice as long as the length of 297 mm of the A4-size paper. Printing paper 750 has page regions of the same size arranged therein in three lines and eight rows. Similarly as described above, cutting line 702, "Fold away from you" line 731," "Fold toward you" line 732 and label region 783 are formed therein so as to make a fold section by cutting the printing paper after printing along cutting line 702, and folding it at "Fold away from you" line 731 and "Fold toward you" line 732, to thereby make the booklet. Similarly as described above, the back surface has an adhesive layer formed therein. Because the printing paper has the same width as A4-sized paper, it can be printed on a general printer, thus allowing a large number of images to be printed therein due to an abundance of pages.

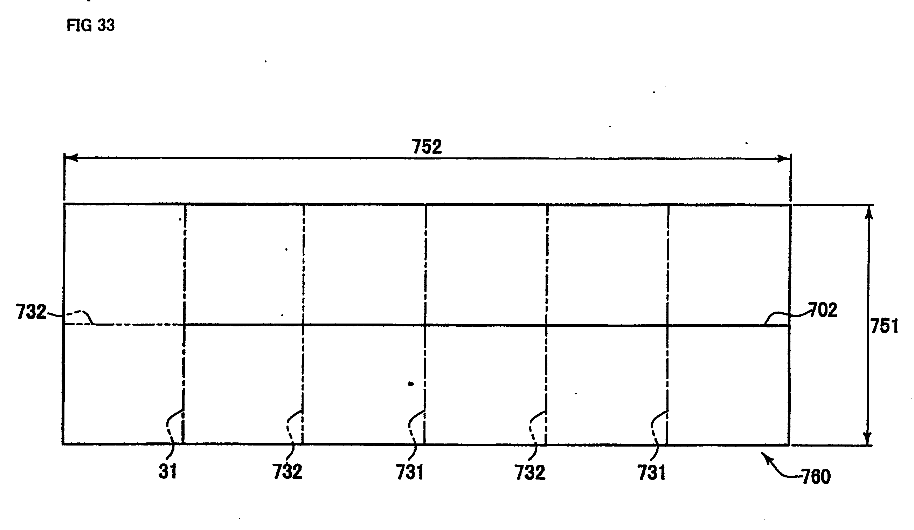

FIG. 33 shows another example of the printing paper having a size of a longitudinal link of A4 sized sheets of paper. The paper has a width of 751 which is equal to that of A4-sized paper, and a length 752 of 594 mm, which is double the length of A4-sized paper. Printing paper 750 has page regions of the same size arranged therein in two lines and six rows. This makes it possible to create a booklet larger than that described in the above example referring to FIG. 32. The printing paper, having the same width as A4-sized paper, allows for printing to be done using a general printer.

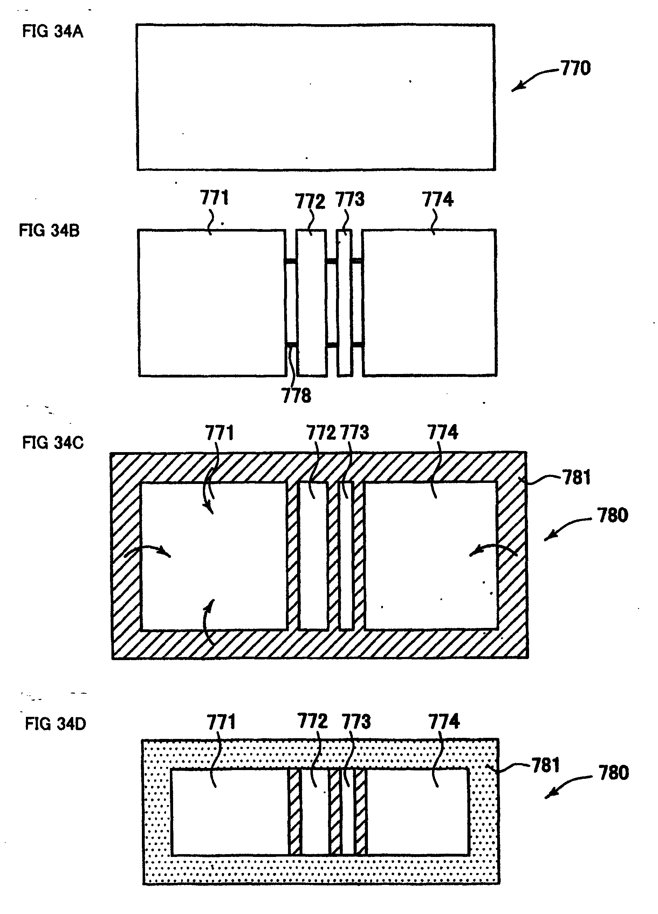

The creation process of the cover will be explained referring to FIG. 34A to FIG. 34D. Firstly, core element 770 composing the cover as shown in FIG. 34A, is obtained. Core element 770 may be composed of paper, plastic, wood, metal material and so forth. The core element intended to make the cover is preferably configured by a material which is hard to a certain extent, but not limited to the materials listed above. As shown in FIG. 34B, typically by punching or the like of core element 770, first cover component 771, back cover component 772, assist component 773, and second cover component 774 are formed. These four components are conveniently formed by being bound with each other by joint portion 778. This helps to avoid separation and to improve handling in the succeeding processes.

As shown in FIG. 34C, first cover component 771, back cover component 772, assist component 773, and second cover component 774 are placed on cover 781. Cover 781 decorates the cover of the finished booklet, so it is recommended to use a user's favorite design. For example, a user's favorite colors or patterns can be used. The cover may be composed of paper, vinyl resin, cloth, leather and so forth. Cover 781 is placed back side up, and the four components are placed therein. As indicated by the arrows, the edge portions of cover 781 are folded, and attached to the four components. The joint portion is detached as necessary. The cover is thus completed as shown in FIG. 34D.

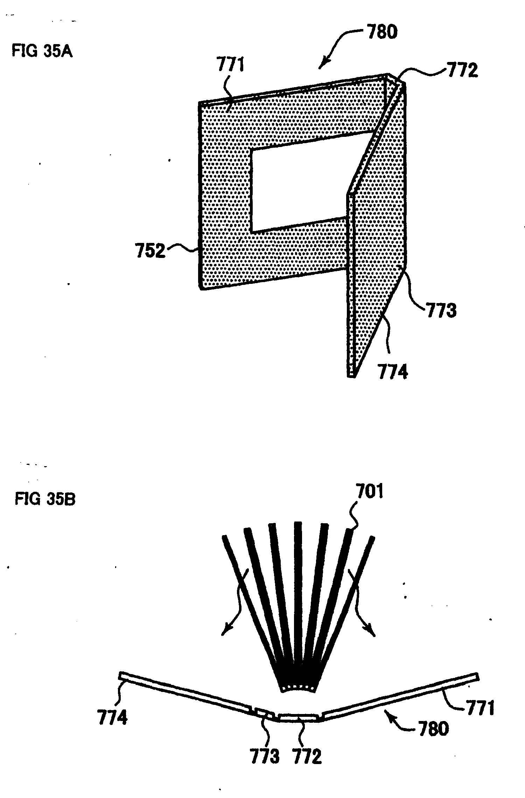

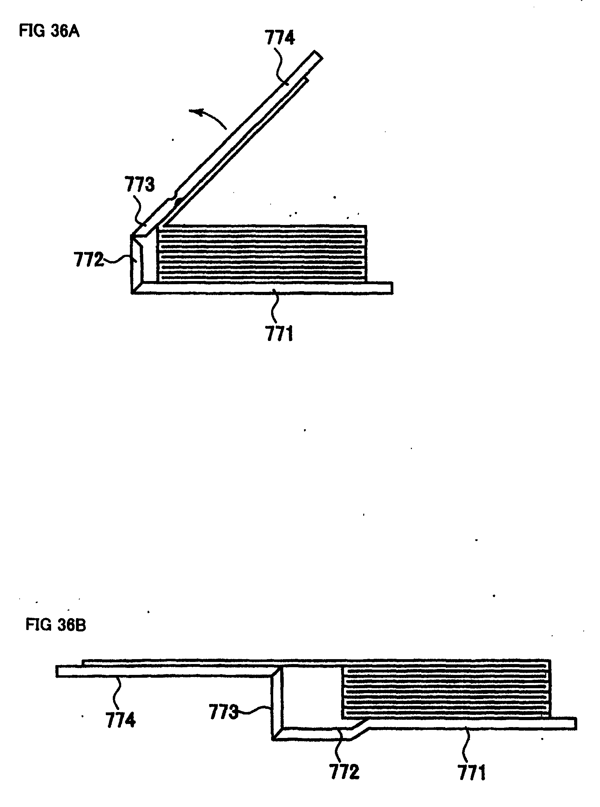

FIG. 35A shows a perspective view of the finished cover. The surface of cover 780 is covered with cover 781, showing a good design. As shown in FIG. 35B, printing paper (fold section) 701 obtained by folding and bundling in the previous process steps is attached to cover 780. How to open the finished booklet will be described referring to FIG. 36A and FIG. 36B. As shown in FIG. 36A, opening from the second cover component 774 side, allows both edges of assist component 773 to fold, and this makes it possible to fully open the pages of the booklet.

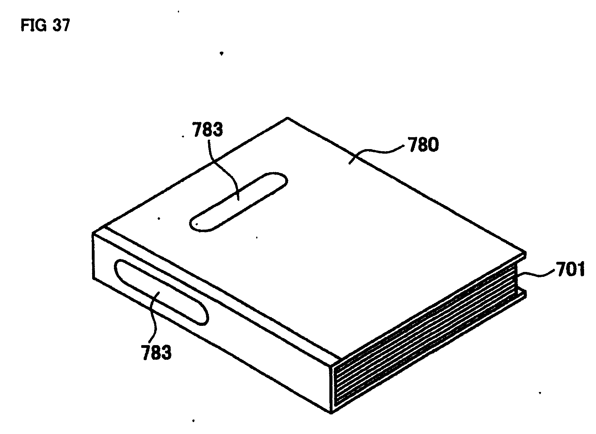

As shown in FIG. 37, label 783 formed in a part of printing paper 701 is then placed on the surface of cover 780 and the back cover. Label 783 has printed therein a title or other characters by which the booklet can be identified.

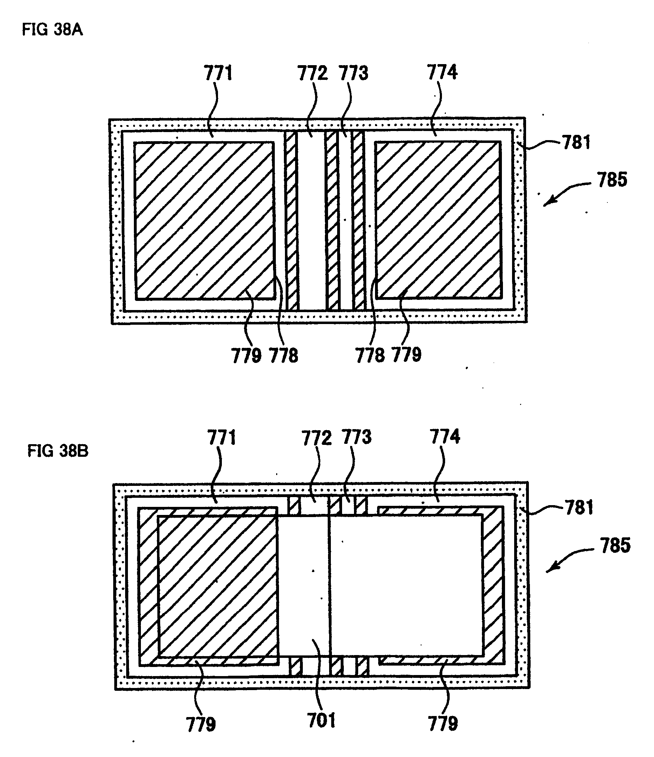

Another example is shown in FIG. 38A and FIG. 38B. As shown in FIG. 38A, first cover component 771 and second cover component 774 has an insertion bag 779 formed therein. The page insertion bag 779 has an opening 778 on one edge thereof, whereas three other edges are adhered to the cover component. As shown in FIG. 38B, the first page and the last page are inserted therein through openings 778, which thereby complete the booklet. The cover can readily be exchanged by virtue of a simple procedure of insertion of pages into insertion bag 779. The inserted pages are also made viewable if insertion bag 779 is formed using a transparent material. A vinyl resin can typically be used. Insertion bag 779 may be opaque for an exemplary cover where the first page has no printing therein.

Printing and folding of the printing paper having the cutting lines and folding lines formed therein as described above makes it possible to readily and rapidly create the booklet. By forming the adhesive layer on the printing paper, and by forming the release-assist formation line on the release paper covering the adhesive layer, it is made possible to readily peel off the release (peel & stick) paper, to bond the printing papers with each other which thereby form the fold section, and to attach it to the cover which in turn, creates the booklet. Because the cover is composed of the first cover component, the assist component, and the second cover component which are bound in an integrated manner while respectively placing a gap in between, the booklet is foldable at the individual gaps, and easy to open.

### [#5 Invention]

### [Embodiment of the Invention]

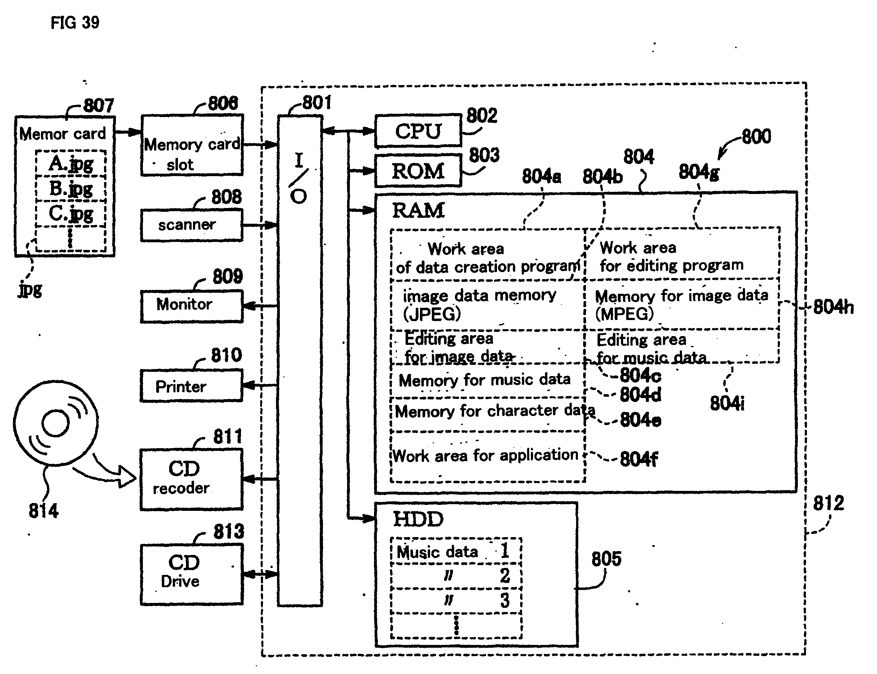

Hereafter, the operation image of this invention is explained using a drawing. Fig. 39 is a block diagram explaining the outline of the image recording medium creation system of this example. The image recording medium creation system 800 shown in Fig. 39 has the computer 812 which has CPU802, ROM803, RAM804, and HDD805. And the input device and output equipment of the slot 806 (it considers as a slot 806 hereafter) for memory card, a scanner 808, a monitor 809, a printer 810, and CD recorder 811 grade are connected to this computer 812 through I/O Port 801, and the image recording medium creation system 800 is constituted by this invention. Into the slot 806, insertion of memory card 807 is enabled and the image data (A. jpg, B. jpg, C. jpg) as JPEG static-image data of the image photographed with the digital camera (not shown) is saved at memory card 807. These image data (A. jpg, B. jpg, C. jpg) is saved where compression processing of a JPEG method is performed with the body of a digital camera. In addition, although there is a thing of various methods in memory card 807, what suited each method is used for the slot 806 which inserts this. In addition, memory card 807 is attached in the adapter corresponding to memory card 807, and you may make it insert in a slot 806.

Furthermore, in RAM804 in a computer 812, data origination program work area 804a, image data (JPEG) memory 804b, image data-editing memory 804c, and music data memory 804d and alphabetic character data memory 804e and application work area 804f, edit program work area 804g, image data (MPEG) memory 804h, the music data-editing area, etc. are assigned. Furthermore, in HDD805, the music data 1, the music data 2, the music data 3, etc. are memorized as music data.

As the image album creation step of this invention that 1^{st} step is reading of the data of static image, and 2^{nd} step is selecting the music and 3^{rd} step is writing to the display and to the CD. Since it is easy as a step of actuation, it is the system which is easy to treat to anyone, and CD with which the electronic image album with music was saved for a short time can be created. Therefore, not only the vendor of electronic album creation but an individual user can use it.

Next, the image recording medium creation system of this invention explains a means to create an image recording medium. As an image recording medium, although the case of CD-R is shown, CD-RW is sufficient. First, the power source of a computer 812 is turned ON and application software is started. Next, the image data currently recorded on memory card 807 is read from a slot 806, and deletion, an addition, and edit of an image will be performed continuously. Image recording media containing the static image photographed with the digital camera etc. to edit, such as Compact Flash (trademark) and Smart Media, are inserted in the slot 806 for memory card, and image data is read. At this time, all the images saved at the record medium are read. The read image data is displayed on the monitor of a personal computer. It is also possible to except unnecessary image data at this time.

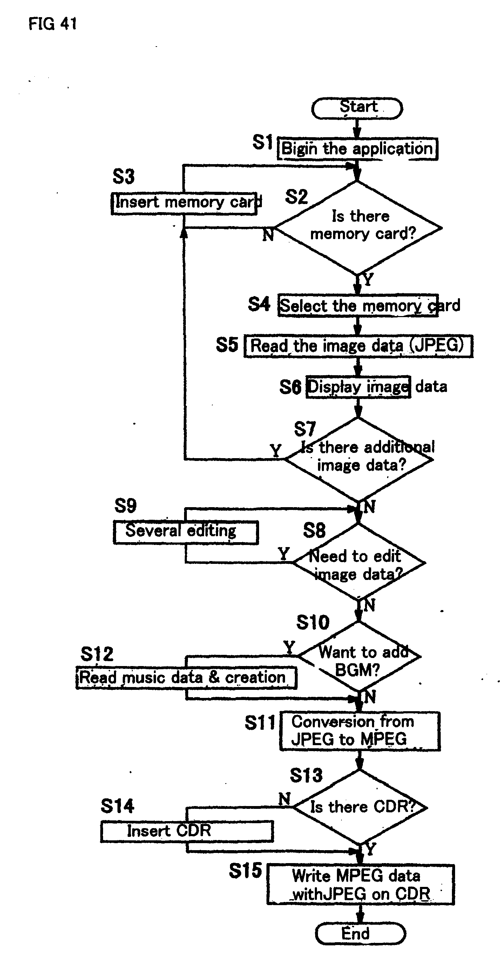

It judges whether memory card 807 is inserted in the slot 806 after processing of Fig. 41 of S1 (S2). When memory card 807 is not inserted in the slot 806 by this decision, memory card 807 is inserted in a slot 806 by S3. At this time, the display for which insertion into the slot 806 of a memory card 807 is urged to a monitor 809 is made. On the other hand, if it is checked that memory card 807 is inserted in a slot 806, the selection screen of the class of memory card 807 will be displayed on a monitor 809, and the class of memory card 807 inserted this time will be chosen on a screen (S4). As a class of memory card 807, Smart Media, a memory stick, Compact Flash (trademark), CD, etc. are mentioned, for example.

When using a computer with a touch panel function, the selection of the above-mentioned memory card 807 can be performed when user touch the location where it corresponds on a selection screen by the finger or the bearing bar of dedication. When operating said application by computer to which the touch panel function is not attached, it can carry out by clicking an applicable part with a mouse.

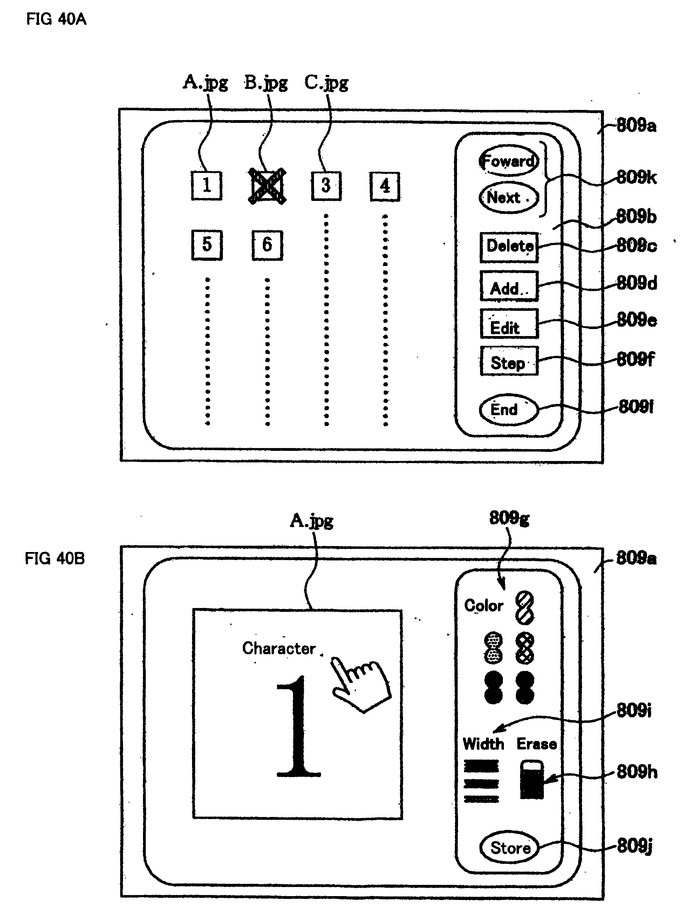

In S4, a check of having chosen from on a selection screen the thing of the same class as the memory card 807 inserted in the slot 806 reads the JPEG static-image data (A. jpg, B. jpg, C. jpg) saved at memory card 807 (S5). This processing of S5 is performed by CPU802 based on a data read-out program incidental to the above-mentioned application software. Under the present circumstances, only the image data (JPEG image data) compressed by the JPEG method among the image data saved at memory card 807 is searched, and the above-mentioned data read-out program is set up so that only JPEG image data may be read. In addition, not the thing limited only to a JPEG format but the image of other formats may be read, and you may change into JPEG. While the read JPEG image data is recorded on HDD805 shown in Fig. 39, the temporary storage of it is carried out to image data (JPEG) memory 804b of RAM804. And as shown in Fig. 40A, the image (1, 2, 3) based on each image data (A. jpg, B. jpg, C. jpg) bundles up, and it is displayed on a monitor 809 (S6). In addition, let a data read-out program and CPU802 be static-image data reading means.

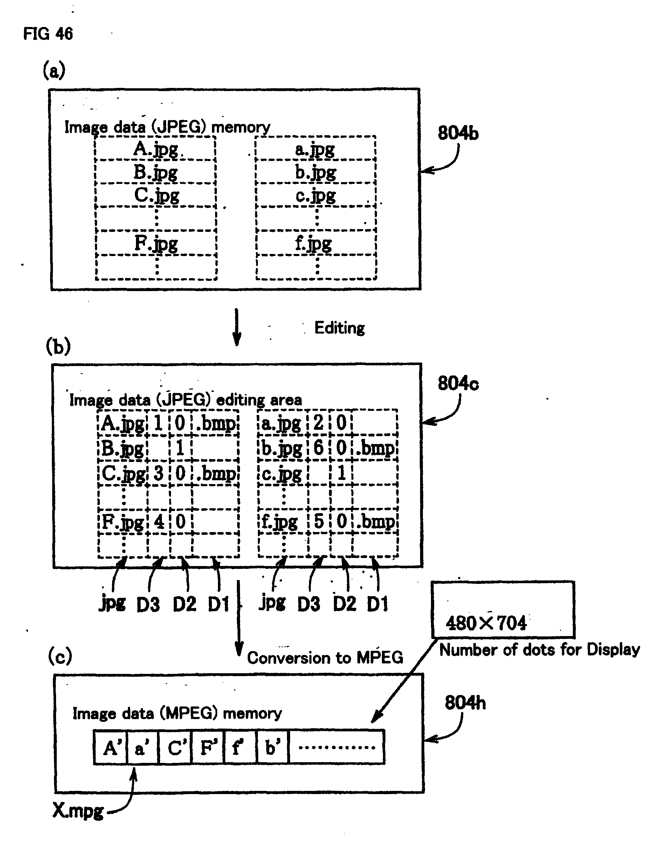

Then, in S7, when it judges whether there is any addition of image data and there is an addition of image data further, Add button 809d of Fig. 40A is chosen, and it moves to the above-mentioned process of S3. The JPEG static-image data saved at another memory card 807 newly inserted in the slot 806 by this are recorded on image data (JPEG) memory 804b of RAM804 with the JPEG static-image data read previously temporarily, as shown in Fig. 46A. And the image based on the added JPEG static-image data is displayed with the image previously read into display screen 809a of Fig. 40A.

On the other hand, in not adding image data any more, in S8, it judges whether an image is edited or not. When editing an image, the following various editing operation is performed (S9). First, in attaching an alphabetic character to each image, in the display screen shown in Fig. 40A, it chooses an image to edit an alphabetic character into. After specifically pushing Edit button 809e currently displayed on actuation frame 809b of display screen 809a, an image to edit from the image (1, 2, 3) currently displayed is chosen. After selection of an image to edit is completed, as shown in Fig. 40B, only the selected image is large and is displayed on display screen 809a of a monitor 809 (Fig. 40B shows display screen 809a at the time of choosing an image 1). And in attaching an alphabetic character to an image 1, in 809g of color selection fields currently displayed on actuation frame 809b, the favorite color suitable for an image 1 is chosen, with a finger or the indicator rod of dedication, when that is not right, in the case of a computer with a touch panel function, a display screen top is traced with a mouse, and it gives an alphabetic character suitably on an image 1. A favorite alphabetic character can be formed also changing the color of a line depending on the case choosing the size of a suitable line from size field 809i of a line, or choosing 809h of rubbers etc. suitably on the occasion of grant of an alphabetic character. Moreover, decoration etc. can also be given to not only an alphabetic character but an image. If edit is completed, Store button 809j will be chosen, and editing operation is ended.

In addition, in the case of this operation, as object data (for example, bit map data) D1 other than JPEG static-image data, objects, such as decoration of the alphabetic character or image given by editing operation, are saved with corresponding to each JPEG static-image data jpg at image data-editing area 804c, as shown in Fig. 46B.
[0036]
Moreover, in deleting an unnecessary image, after choosing Delete button 809c in actuation frame 809b in the display screen shown in Fig. 40A, an image unnecessary on display screen 809a can be performed by choosing with a finger, the bearing bar of dedication, or a mouse. To the image judged to be unnecessary by this selection, the displays (for example, x mark etc.) of the purport which shows that it is deleted are given on the display screen. In addition, deletion of an image can be canceled by choosing again the image chosen as it is unnecessary with a finger, the bearing bar of dedication, or a mouse. At this time, as shown in Fig. 46B, the record decision data D2 for judging whether an image is recorded or not with the JPEG static-image data jpg currently recorded on image data (JPEG) edit area 804c and a corresponding gestalt are created. In Fig. 46B, the case where an image is recorded is expressed with 0 (when an image is not deleted), and the case where an image is deleted is expressed with 1 (when not recording an image). And when creating MPEG dynamic-image data, this record decision data D2 reads only the thing of 0.

Furthermore, in edit processing of the image of S9, the sequence of the static image reproduced in a dynamic image can also be changed. That is, in display screen 109a of Fig. 40A, Step button (809f) currently displayed on actuation frame 109b is chosen, and the image with which sequence is replaced is chosen after that. And in the condition of having chosen the image to replace, by choosing suitably the Forward in actuation frame 809b, or Next button 809k, it can be made to be able to move on the display screen and the selected image can be set up in favorite sequence. At this time, as shown in Fig. 46B, based on the set-up sequence, the image sequence data D3 are formed in the form corresponding to each JPEG image data jpg (or when editing operation is completed).

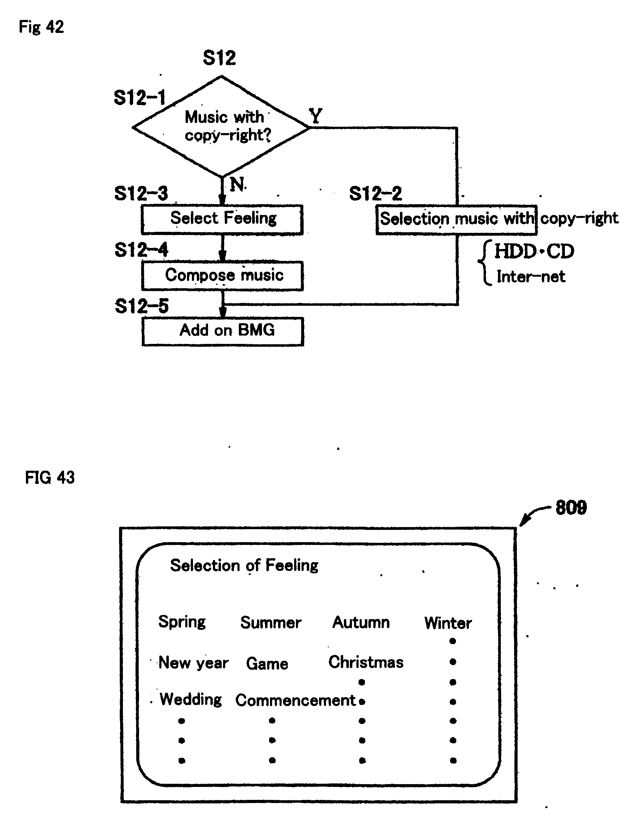

If a series of above edits are completed, in the display screen of Fig. 40A, End button 809l in actuation frame 809b will be chosen. Thereby, image editing operation is ended and the display screen shown in Fig. 40A is closed. The music which suits the image with which the user was read as a next step of electronic album creation is chosen. The selection screen which urges decision whether background music (BGM) is given to the dynamic image created is displayed (for example, display of a publication like "whether BGM is attached", "yes", and "no"). Here, when it judges whether background music (BGM) is given to the dynamic image created (S10) and attaches BGM, music data can also be chosen from two or more music data currently recorded on HDD805, and can be downloaded from the Internet etc., and the existing music can also be used for them. Or it is also possible to write music by the composer. The order of music data selection is shown in Fig. 42. A user chooses whether the existing music is used by S12-1, or music is newly created. When using the existing music, it progresses to S12-2, and it will download from the Internet etc., or it will choose from the music beforehand saved in CD containing music data, or HDD, and the ready-made music with which a user is considered to be the best for an image will be determined. It progresses to S12-3 to newly create music rather than to use the existing music.

There is the music reading approach currently recorded on the approach of choosing from the music currently recorded on HDD as an approach of choosing from the existing music of S12-2 of drawing 42, the approach of downloading from the Internet etc., CD, etc. If the approach of choosing music from HDD is chosen, two or more music data (the music data 1, the music data 2, music data 3) currently recorded on HDD805 shown in Fig. 39 will be read, and the information on music data (for example, a title, performance time amount, etc.) will be displayed on display screen 809a. Thereby, favorite music can be chosen with reference to the information on two or more displayed music data. And selection of music (BGM) records the music data of the selected music on music data memory 804d of RAM804 temporarily. If the approach of downloading from the Internet is chosen, it will access automatically to the site which offers music, and the lists of music (for example, a title, performance time amount, etc.) will be displayed. A user will choose favorite music from there. When reading the data of the music currently recorded on the CD drive 813 or other record media when reading the data of the music currently recorded on record media, such as CD, a record medium will be inserted in each slot for memory card, and the music data of music will be chosen and read from the inside.

If it chooses not to choose from the existing music in S12-1, a composer's composition function will be used. The composer is included in the application software as an image medium creation system, and the data of music are also saved beforehand at it. And the grouping of the music is carried out according to each image, for example, it is divided and saved at the New Year, the graduation ceremony, the marriage ceremony, etc. in spring, summer, autumn, and winter. A user chooses the theme doubled with the electronic album to create (S12-3). Various themes are displayed on a personal computer monitor 809 (Fig. 43). If it thinks that the image saved on the electronic album which a user creates is a spring thing and a spring group will be chosen, a composer will select 1 thru/or the number vibrant tune of music 1 which carried out grouping and select 1 thru/or the number vibrant tune of music 2 in spring continuously. Succeeding music 3, music 4, and music 5 -- 1 thru/or a number vibrant tune are selected one after another from the music which carried out grouping in ... and spring, and new music is composed (S12-4).

The image of music creation is shown in Fig. 43. They are the music 1 shown here, music 2, music 3, and the music from which all ... is divided into the same group. The music which chose it as him the number vibrant tune every from them since the music appropriate for spring was collected by the spring group, and was made by grouping serves as a music tone appropriate for spring. Moreover, if the grouping of a music tone, II Tempo, etc. is finely carried out further in consideration of the spring group, the new music which a number vibrant tune connects will not turn into unnatural music. In this way, the made music turns into original new music which is not boiled till then. If it performs at random which vibrant tune of which music is chosen and it is connected, new music can be created one after another.

It does not determine which vibrant tune a composer connects, but a user chooses it, and based on the selection, it can be connected so that a composer may become natural music. Under the present circumstances, the die length of the music created is decided by how many vibrant tunes a user chooses.

In case music is written by the composer, the die length of music is decided in consideration of the number of sheets of the read static image. When the existing music is chosen, the time amount of one image displayed is calculated according to the die length of music. For example, if the image of 24 sheets has music in 2 minutes, the display time per sheet will become 5 seconds. Or a setup of ending music on the way if the display time per sheet is decided and display termination of all the images is carried out, and a setup of displaying from the 1st sheet again succeeding after even the last image displays are also possible. Or you may make it decide the display time (time amount to slide) of the image per sheet according to the die length of music conversely.

Creating music by selection or the composer from the Internet etc. as mentioned above, it includes in the electronic album which creates the data of this music (S12-5). In case the image of this completed electronic album is appreciated, music is performed with an image.

In not completing reading (S12) of the above music data or not giving BGM to a dynamic image, it is considered that all editing operation was completed and it creates MPEG dynamic-image data with a data origination means from the JPEG static-image data jpg stored in image data-editing area 804c. At this time, CPU802 reads the data origination program stored for example, in HDD805, and starts a program by data origination program work area 804a of RAM804. That is, in the case of this operation, let CPU802 and a data origination program be dynamic-image data origination means. As a dynamic-image data origination means is shown in Fig. 46B, based on the JPEG static-image data jpg currently recorded on image data-editing area 804c, the above-mentioned object data D1, the record decision data D2, and the image sequence data D3, the static image based on the JPEG static-image data jpg creates MPEG dynamic-image data (X. mpg) which are displayed as the selected sequence, as shown in Fig. 46C. The created MPEG dynamic-image data are temporarily recorded on image data (MPEG) memory 804h of RAM804 (S11). In addition, a dynamic-image data origination means creates the dynamic-image data which displayed the static image in the resolution of 480x704 dots.

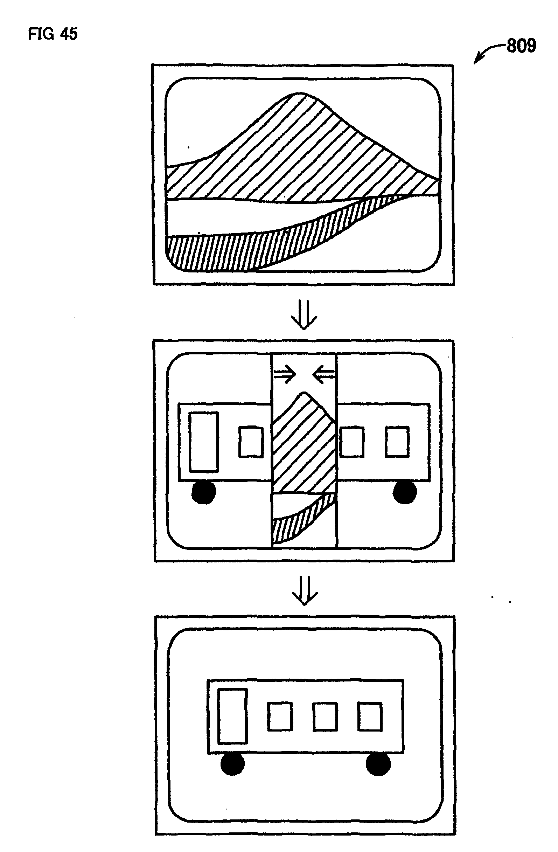

In case it creates as MPEG dynamic-image data, it is also possible to perform effect processing of not replacing simply a change of each image appreciated in a slide format one after another, but the following image being set from a four way type, and making and appearing, or the next screen appearing and being set from both sides, etc. An example of this processing is shown in Fig. 45. A new image appears from both sides and Fig 45 draws signs that it changes to the following image, by being united in middle of the screen. A change of the image of the electronic album appreciated by this processing becomes what was rich in change.

By including in application software beforehand, the pattern of this processing can be processed by which pattern, or a user can choose it easily.

The collection of image data created as an album with music can be outputted to CD-R or a printer. When outputted to a printer, an image is printed out as an album. Of course, music data are not outputted in this case. It is also possible to output only a part although an image can also output all. However, software can manage which image was printed out and a user can refer to it. That is, it has the system which records the information on the printed image. This information can also be written in the Records Department, such as HDD, and can also be referred to later. When it prints out by this function next time, it becomes possible to output the same image or to output a different image.

When CD-R is chosen as an output unit, it is saved as image album data with music at CD. It is also possible to output and save all images also in this case, and it is also possible to output only a part. Moreover, software can manage which image was outputted and saved similarly, and a user can refer to it.

The output method to CD-R is described. As shown in S13 of Fig. 41, it checks whether CD-R is inserted in the CD recorder 811 shown in Fig. 39. When CD-R is not inserted in the CD recorder 811, the display urged to the display screen of a monitor 809 that CD-R is inserted in the CD recorder 811 is made. If CD-R is inserted in CD recorder or CD-R is inserted in S14, it will succeed in the acknowledgment indicator which checks whether I may record MPEG dynamic-image data in the display screen of a monitor 109 at CD-R, and if the purport which may be recorded is chosen, MPEG dynamic-image data will be recorded on CD-R by the image recording medium creation means (CD recorder 811) (S15). At this time, JPEG static-image data and the music data 1 are also recorded on CD-R with MPEG dynamic-image data (when the music data 1 are adopted as BGM). In addition, based on the record decision data D2 which show the JPEG static-image data jpg to Fig. 46B, only what is used for creation of MPEG dynamic-image data (X. mpg) can be recorded on a record medium (CD-R).

When saving at CD, it is saved as electronic album data which mixed image data and music data. Moreover, JPEG static-image data are also recordable. For this reason, also in case the electronic album saved at CD is appreciated, an image with music can be appreciated in a slide show format. Making the image of the marriage ceremony which followed, for example, was photographed with the digital camera link with music, using it as an electronic album, saving it at CD, and distributing it to the persons concerned is also considered. In this case, it is also easy to create the same CD which saved the data of the same electronic album, and it is also easy to distribute this. Moreover, since distributed CD can also be easily appreciated with music and is created as MPEG dynamic-image data by said approach, the image of a high image can be appreciated.

Moreover, since it is created by CD, it is also reproducible also by the playback device corresponding to MPEG methods, such as a DVD player besides playback with a personal computer. If JPEG static-image data are also saved at CD, the image which edits by computer (for example, personal computer for home use), or is outputted on a monitor can be appreciated, or it can utilize by the known approach of transmitting an image with e-mail etc. as usual static-image data.

The JPEG static-image data which serve as a basis of MPEG dynamic-image data in a dynamic image as which the static image of 480x704 dots of resolution is continuously displayed by the DVD player by the above image recording medium creation systems of this invention although refreshable CD can be created are not restricted only to what is read from memory card 807 like the above-mentioned example. For example, as shown in Fig. 39, as an external instrument connected to a computer 812, a scanner 808 is adopted, with a scanner 808, a static image can be read as static-image data (JPEG static-image data) compressed by the JPEG method, and MPEG dynamic-image data can also be created from this JPEG static-image data. The image of a photograph [printed output (development)] can specifically be captured with a scanner 808, and it can save as MPEG dynamic-image data and JPEG static-image data at CD.

The image recording medium creation system 800 can consider installing in locations, such as a Photoshop, a convenience store or a wedding hall, and leisure facilities, and using. when it installs in a Photoshop or a convenience store, service which offers service of recording the image of an old photograph on CD as JPEG static-image data and MPEG dynamic-image data, or records image data on CD instead of carrying out the printed output of the image photographed by the digital camera (or the thing to do for a printed output) can also be offered.

It can serve distributing as commemoration CD created by the system of this invention to a tourist etc. by on the other hand installing in a location like leisure facilities.

Furthermore, an individual user can also use the image recording medium creation system 800 of this invention. What took a photograph with the digital camera in the case of the individual user (for example, a nuptial photograph) is used as an electronic album with music, and record and the usage of supplying an attendant widely can be considered to CD. Since the image recording medium creation system 800 can be performed to the electronic album creation with music, and CD to record by easy actuation, an individual user can also use it easily and it has become the high thing of utility value. The attendant who received this CD can also appreciate immediately with a personal computer, DVD, etc. If the electronic image to which music was attached is appreciated in a slide show format, the scene which considers and comes out will revive vividly.

## Claims

1. The booklet creation system which has an electronic image data reading means, an edit means to edit the read electronic image data, a print-data creation means to generate print data in the format which uses this electronic image data as a booklet, and a printing means to print these print data,
in order that said print-data creation means may print image data to a printing paper, the data which adjusted the printing position of this image data, magnitude, the sense of direction, and sequence to what is used as a booklet are created,
said printing means is a booklet creation system **characterized by** printing the print data based on said print-data creation means in the format which uses the printing position, magnitude, the sense of direction, and sequence as a booklet.

2. The booklet creation system according to Claim 1 wherein a printing means prints image data to the printing paper, and is **characterized by** the printing paper having a cutting line and a bending line.

3. The booklet creation system according to Claim 1 wherein a printing means prints image data to a printing paper, and is **characterized by** this printing paper having a slitting and a bending line.

4. A printing means according to Claim 1 is a booklet creation system **characterized by** printing image data and printing a cutting line and a bend line to a printing paper.

5. The booklet creation method that the printing paper wherein the image was printed by the printing means of mention in any one of Claims 1 to 4, is made to the form of a booklet by bending with a slit, and sticking a cover and a back cover.

6. The booklet creation method that the printing paper wherein the image was printed by the printing means of mention in Claim 1, is separated and is made as a booklet by sticking this printing paper on the pre-filed pasteboard for booklet creation.

7. Pasteboard for booklet creation according to Claim 6 which sticks a printing paper by the attachment side of said pasteboard for booklet creation serving as adhesive tape, and removing the releasing paper which cover the adhesive layer.

8. The booklet creation method which is a longwise printing paper and is used as a booklet by printing an image in an order from one edge, and bending a printing paper with a printing means according to Claim 1.

9. The booklet with which it is the booklet created by the booklet creation approach according to Claim 5, 6, or 8, and the stowage which attaches the record medium which stored the image data corresponding to the image contained by the booklet was added to the inside of the front cover.

10. The booklet creation system given in any one of Claims 1 to 4, which has a dynamic-image data origination means to create the dynamic-image data of an animation with which this frame is continuously displayed between 1 commuter's tickets considering the static image based on the JPEG static-image data read from the external instrument as one frame from said JPEG static-image data,
said dynamic-image data origination means is a booklet creation system **characterized by** being what creates dynamic-image data which a static image exceeds 240x352 dots, and are displayed in the resolution of the range of 480x780 or less dots as MPEG dynamic-image data compressed by the compression method based on an MPEG method.

11. The printing paper for a booklet by having a slitting line and a bending line, two or more printing fields being divided by said slitting line and said bending line, cutting according to a slitting line, bending according to a bending line, and sticking a cover.

12. The printing paper for a booklet by two or more printing fields being the configurations of the shape of a long picture located in a line with the one direction, having a bending line on each boundary of said printing field, bending according to a bending line, and sticking a cover.

13. The printing paper according to Claim 11 or 12 whose each of said printing field is a square.

14. The printing paper according to Claim 12 with which it pushes with a perforation and the bending line by press is located in a line by turns as said bending line on each boundary of said printing field.

15. The printing paper according to Claim 12 with which a perforation and a micro perforation are located in a line by turns as said bending line on each boundary of said printing field.

16. The printing paper according to Claim 12 in which it has at least a bending line by press or by perforation, said perforation was penetrated to the thickness direction of said printing paper, and said bending line by press put to the interstitial segment to the thickness direction of said printing paper.

17. The printing paper which adhesives and a releasing paper adhere to a rear face and it exfoliate and make said releasing paper rival with adhesives in any one of Claims 11 to 16.

18. The printing paper which is attached the core material in the rear face of printing paper with the printing field for printing in any one of Claims 11 to 17.

19. The cover used as a booklet by being plate-like, being able to print, having a bending line, bending according to said bending line, and attaching in said printing paper.

20. The booklet creation system which has a print-data output means located in a line with the longitudinal direction to the printing paper longitudinally in the electronic image data incorporated by the image incorporation section with the electronic image data reading means to output print data to a printing means so that image printing may be made for two or more printing fields of every,
said booklet creation system **characterized by** planning considering as an album booklet by bending a said straight side band-like print sheet on the boundary between each of that printing field after the image printing section located in a line with the longitudinal direction of a straight side band-like print sheet is formed.

21. The booklet creation system according to Claim 1 which can choose and print the field which is not printed after printing only to some fields among said two or more printing fields of a said straight side band-like printing paper.

22. The booklet creation system according to Claim 20 or 21 which said some of print data are printed to the printing field of the first said straight side band-like printing paper, and said residual print data are printed to the printing field of the second said straight side band-like printing paper and said first printing field is stuck at rear face of the termination of a printing paper longitudinally, and the printing field rear face of the start edge of a said second straight side band-like printing paper, are assembled as a booklet.

23. A booklet creation system according to any one of Claims 20 to 22 which forms the adhesive layer for lamination in the rear face of a said straight side band-like printing paper, and is printed to the account printing field of back to front.

24. A booklet creation system according to any one of Claims 20 to 22 which forms the adhesive layer for lamination in the rear face of a said straight side band-like print sheet after printing to said printing field.

25. A booklet creation system according to any one of Claims 20 to 24 which has the cutting section which cuts the boundary between the printing fields of a said straight side band-like printing paper.

26. The printing paper which is longitudinal for bending on the boundary between the printing field, and making it a booklet after having two or more printing fields located in a line with the longitudinal direction and printing print data to said printing field.

27. The printing paper of an according to Claim 26 straight side band-like printing paper which has a joint at the long side edge at least, and two or more said straight side band-like printing papers join in juxtaposition by the joint.

28. The printing paper of an according to Claim 26 or 27 straight side band-like printing paper which has an adhesive layer at the rear face of a said straight side band-like printing paper, removes the releasing paper which covers the adhesive layer, and sticks said rear faces.

29. The printing paper according to any one of Claims 26 to 28 that is longitudinal which is bent on the boundary between said two or more printing fields, and the datum-line section is created, and said printing field is divided, and is bent in said bending datum-line section after printing said print data to said printing field.

30. The printing paper according to any one of Claims 26 to 28 that is longitudinal which is bent on the boundary after printing said print data to said printing field and is created the datum-line section and is bent in the bending datum-line section.

31. The printing paper according to Claim 29 or 30 straight side band-like printing paper which has said even printing fields, makes it "Fold away from you" in said odd-numbered bending datum-line section from an end, makes it "Fold toward you" in said even-numbered bending datum-line section, assembles by sticking the rear face of said printing field, and creates a booklet.

32. The printing paper according to any one of Claims 29 to 31 which is longitudinal that said bending datum-line section is a perforation.

33. The printing paper according to any one of Claims 26 to 32 that is longitudinal which has the adhesive layer formed by the binder which has the adhesion which can maintain a lamination condition, without a field exfoliating in part, and exfoliates for correction of a lamination location, and can carry out lamination again after sticking said rear faces.

34. The printing paper according to Claim 33 that is straight side band-like printing paper which has said adhesive layer and which is 180 micrometers thickness or more and basis weight 100 gr/m² or more and tacks are 12Ns / 25mm or less.

35. The cover for booklet creation equipped with the fly leaf for sticking the printing field rear face of the end of a said straight side band-like printing paper, and the printing field rear face of the other end between the cover and the back cover after bending the printing paper of a publication band-like on the boundary between printing fields in any one of Claims 26 to 34.

36. The printing paper **characterized by** that it has a plural number assigned on one piece of seat equally and a page area of the same type for print and ranges with the Y direction that is a right angle so that each page area can devote itself with an X direction, and "Fold away from you "line which is "Fold away from you" bending Line, "Fold toward you" line which is "Fold toward you" bending Line and cutting line which is dividing said page area next to each other along some borders of a border where said page area is formed and "Fold toward you" line and "Fold away from you "line have something for a right angle and position relation each other at least in X direction and Y direction and it is considered to be one booklet by bending in turn at "Fold toward you" line and "Fold away from you" line.

37. Printing paper according to Claim 36 in which said cutting line formed in plural page areas divides a page area next to each other and penetrate in a thickness direction of paper and have connection section to connect said page area which adjoins each other in the predetermined part of the longitudinal direction of the penetration slot.

38. Printing paper according to Claim 36 or 37 in which leftover area is formed partly which is not as same as a page area, and the above leftover area is separated after printing, and which is made a booklet.

39. Printing paper according to any one of Claims 36 to 38 which is either a rectangle or a square, and on which each page of m line and n row [m, n: integer] is consisted of the same page areas and between (a) line of said page area and (a +1) line of said page area [( a ), odd number], it is established cutting line from the second line to n line and in (a +1) line of said page area and (a +2) lines of said page area, it is established cutting line from the first line to (n-1) line ,and from which the booklet is made by bending "Fold toward you" line at said page area and "Fold away from you" line at said page area and cutting it off at the said cutting line.

40. Printing paper which is made a booklet by turning "Fold toward you " and "Fold away from you" along "Fold toward you" line and "Fold away from you " line made in a border of plural page areas, and which is formed by the carrying that said "Fold toward you" line and "Fold away from you" line can distinguish visually.

41. Printing paper according to Claim 40 which is made by different color lines of said "Fold toward you" line and said "Fold away from you " line.

42. The printing paper which has "Fold toward you" line ditch structure of bottom and has a bottom of the non-cutting department "Fold toward you" so that a ditch opens as the fulcrum, and which is made so that the inside of the ditch structure almost becomes a plane each other at end face.

43. The printing paper which has a page area printed by the surface, and, in a border of said page area, "Fold away from you" line and "Fold toward you" line are formed. On the rear side of said paper, releasing paper has cover up adhesion layer. Said releasing paper has a break in a neighborhood of "Fold away from you" line or in a neighborhood of "Fold toward you" line. When doing "Fold away from you" and "Fold toward you", said releasing paper has exfoliate from said adhesive layer in said break by the deforming force from bending the paper.

44. The booklet cover comprising: the back cover component configuring the back cover of the booklet; The first cover component adjacent to said back cover component, as being spaced by a gap; an assist component adjacent to said first cover component on the side opposite to said first cover component, as being spaced by a gap, and having a width narrower than that of said back cover component; and a second cover component adjacent to said assist component, as being space by a gap, wherein said individual components are **characterized by** being bound in an integrated manner while keeping said gaps, and are foldable at the individual gaps.

45. The booklet cover as claimed in Claim 44, further comprising a wrapping structure wrapping said back cover component, said first cover component, said assist component and said second cover component in an integrated manner.

46. The booklet cover as claimed in Claim 44 or 45, being attached with a fold section which comprises sewed printed sheets of paper so as to configure a booklet.

47. The booklet cover as claimed in any one of Claims 44 to 46, further comprising a page insertion bag, in which the end page of the fold section is inserted, provided on the inner side of at least one of said first cover component and the second cover component.

48. A printing paper comprising: a sheet having, on the surface thereof, page regions allowing printing, and having at least a "Fold toward you" line and a "Fold away from you" line formed at the boundary of said page regions; a adhesive layer formed on the back surface of said sheet; and a release paper having both of, or either one of a first release-assist formation line configured by a slit which extends from said "Fold toward you" line or said "Fold away from you" line formed at the boundary between an arbitrary page region and the adjacent page region towards said adjacent page region adjacent thereto, and projects out from said arbitrary page region, and a second release-assist formation line configured by a slit which extends from said "Fold toward you" line or said "Fold away from you" line towards said arbitrary page region, and projects out from said adjacent region, The printing paper is **characterized** whereby a part of said release paper lifts up from said adhesive layer at said release-assist formation line, by folding transformations in a "Fold away from you" manner at said "Fold away from you" line or in a "Fold toward you" manner at said "Fold toward you" line, said release (stick & peel) paper is peeled off from said adhesive layer.

49. The printing paper as Claimed in Claim 48, having a label region in which a title is printed, formed therein out of said page region.

50. A image-data creation system with music which has static-image data reading means to read from an external instrument, dynamic-image data origination means to create the dynamic-image data of an animation with which this frame is continuously displayed for a period considering the static image based on said static-image data as one frame from said static-image data and image recording medium creation means to record on the recording medium composed with said dynamic-image data and music data.

51. A image-data medium creation system with music which has static-image data reading means to read the JPEG static-image data compressed by the compression method based on a JPEG method from an external instrument, dynamic-image data origination means to create the dynamic-image data of an animation with which this frame is continuously displayed for a period considering the static image based on said JPEG static-image data as one frame from said JPEG static-image data, image recording medium creation means to record on the compact disk (CD) as an image recording medium where said dynamic-image data and music data were created are combined and said dynamic-image data origination means is an image recording medium creation system with music **characterized by** being what creates dynamic-image data which a static image exceeds 240x352 dots, and are displayed in the resolution of the range of 480x780 or less dots.

52. Said dynamic-image data origination means is an image recording medium creation system with music according to Claim 50 **characterized by** being what creates said dynamic-image data as MPEG dynamic-image data compressed by the compression method based on an MPEG method.

53. Said dynamic-image data origination means is an image recording medium creation system with music according to Claim 51 or 52 **characterized by** being what creates the dynamic-image data which displayed said static image in the resolution of 480x704 dots.

54. Said image recording medium creation means is an image recording medium creation system composed with music according to any one of Claims 51 to 53 **characterized by** being what records said JPEG static-image data on said CD with said dynamic-image data.

55. Said dynamic-image data is an image recording medium creation system with music given in any one of Claims 51 to 54 **characterized by** displaying the static image with which the plurality based on said two or more JPEG static-image data differs on fixed period sequence, respectively.

56. The image recording medium creation system with said music data given in any one of Claims 50 to 55 **characterized by** being created by the composer who makes new music by connecting the vibrant tune of two or more music classified according to the music tone.

57. The image recording medium creation system with said music data given in any one of Claims 50 to 56 **characterized by** counting the number of the pictures of the photograph which indicates by sequential, calculating the whole display time, and generating the music of the die length corresponding to the display time of the whole by selection or said composer.

58. The image recording medium creation system with music given in any one of Claims 50 to 56 which creates said dynamic-image data so that the display of that a performance of music data is completed, simultaneously two or more dynamic-image data may end said dynamic-image data origination means, the display time per one of two or more of said dynamic-image data to display may be calculated and said dynamic-image data may be displayed by the performance time amount of said music data according to said display time.

59. The image recording medium creation system with music given in any one of Claims 50 to 58 **characterized by** recording printing image information when image data is printed.

60. The image recording medium creation system with music given in any one of Claims 50 to 59 which equipped said dynamic-image data with the function to which effect processing is applied.

61. The image recording medium with music **characterized by** being the compact disk created by any one of Claims 50 to 60 by the image recording medium creation system of a publication.

62. The image recording medium as a compact disk recorded combining dynamic-image data and music data of an animation with which a static image is continuously displayed for a period at least.
Said dynamic-image data are an image recording medium with music
**characterized by** a static image exceeding 240x352 dots, and making it displayed in the resolution of the range of 480x780 or less dots.
